(19) **Europäisches Patentamt / European Patent Office / Office européen des brevets**

(11) **EP 4 589 918 A1**

(12) **EUROPEAN PATENT APPLICATION**
published in accordance with Art. 153(4) EPC

(43) Date of publication:
**23.07.2025 Bulletin 2025/30**

(21) Application number: **23887564.5**

(22) Date of filing: **14.08.2023**

(51) International Patent Classification (IPC):
**H04L 49/253** (2022.01)

(52) Cooperative Patent Classification (CPC):
**G06N 20/00; H04L 49/253; H04L 67/1042;**
**H04L 67/141; H04Q 11/00**

(86) International application number:
**PCT/CN2023/112962**

(87) International publication number:
**WO 2024/098869 (16.05.2024 Gazette 2024/20)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **11.11.2022 CN 202211414731**

(71) Applicant: **Huawei Technologies Co., Ltd.**
**Shenzhen, Guangdong 518129 (CN)**

(72) Inventors:
• **CHEN, Di**
  **Shenzhen, Guangdong 518129 (CN)**
• **SHEN, Shengyu**
  **Shenzhen, Guangdong 518129 (CN)**
• **LING, Wenkai**
  **Shenzhen, Guangdong 518129 (CN)**
• **XIE, Shanggang**
  **Shenzhen, Guangdong 518129 (CN)**

(74) Representative: **Gill Jennings & Every LLP**
  **The Broadgate Tower**
  **20 Primrose Street**
  **London EC2A 2ES (GB)**

(54) **COMMUNICATION METHOD AND APPARATUS**

(57) This application relates to a communication method and apparatus, to implement a full interconnection between servers by connecting a computing device in a server included in a computing cluster to an optical switch. In this application, a management device obtains a quantity M of servers in the computing cluster and a quantity N of computing devices in each server; determines, based on the quantity M of the servers, a minimum quantity n of computing devices required by each server to implement a full interconnection between the M servers, where M, N, and n are positive integers; when n is less than or equal to N, determines a connection policy between the servers when the M servers are fully interconnected; and connects the M servers according to the determined connection policy to enable the M servers to be fully interconnected.

```
┌─────────────────────────────────────────────────────────┐
│ A management device determines, based on a quantity M of │ ─── S801
│ servers, a minimum quantity n of computing devices       │
│ required by each server to implement a full              │
│ interconnection between the M servers                    │
└─────────────────────────────────────────────────────────┘
                          │
                          ▼
┌─────────────────────────────────────────────────────────┐
│ If n is less than or equal to a quantity N of computing  │ ─── S802
│ devices included in each server, the management device   │
│ determines a connection policy between the servers when  │
│ the M servers are fully interconnected                   │
└─────────────────────────────────────────────────────────┘
                          │
                          ▼
┌─────────────────────────────────────────────────────────┐
│ The management device connects the M servers according   │ ─── S803
│ to the determined connection policy between the servers  │
│ to enable the M servers to be fully interconnected       │
└─────────────────────────────────────────────────────────┘
```

FIG. 8

Description

CROSS-REFERENCE TO RELATED APPLICATIONS

This application claims priority to Chinese Patent Application No. 202211414731.1, filed with the China National Intellectual Property Administration on November 11, 2022 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

As a scale of a single model in the artificial intelligence field is increasing, a single machine cannot accommodate a training dataset, model parameters, and information generated in a training process that correspond to a large model. Therefore, using high computing power and a large memory of a computing cluster to perform distributed training on the large model becomes a mainstream choice.

A plurality of computing devices (for example, neural-network processing units (neural-network processing units, NPUs)) are disposed in each server in the computing cluster. When distributed training is performed on the large model, data generated when the large model is trained needs to be transmitted between NPUs in a same server and between NPUs in different servers over a network. If data transmission is implemented over an electrical switching network, because a large amount of to-be-transmitted data is generated during training of the large model, a capacity of an electrical switch needs to be expanded. However, after the capacity of the electrical switch is expanded, power consumption in an entire data transmission process is significantly increased.

To support transmission of data generated during the training of the large model and reduce power consumption in the data transmission process, in a conventional technology, an optical switching network is considered to be used to transmit the data generated during the training of the large model. However, a solution for a connection between NPUs over the optical switching network is not provided in the conventional technology. Therefore, how to implement a full connection between all servers in the optical switching network to efficiently implement data transmission between NPUs is an urgent problem that needs to be resolved.

SUMMARY

This application provides a communication method and apparatus, to provide, in an optical switching network, a solution in which a computing device in a server included in a computing cluster is connected to an optical switch, to implement a full interconnection between servers.

According to a first aspect, a communication method is provided. The method may be performed by a management device, or may be performed by a chip system. The chip system can implement a function of the management device. The method is applied to a computing cluster. The computing cluster includes M servers, and each server includes N computing devices. The M servers are connected to an optical switch via computing devices in the M servers, to implement an interconnection between the servers. The method includes: determining, based on the quantity M of the servers, a minimum quantity n of computing devices required by each server to implement a full interconnection between the M servers, where M, N, and n are positive integers; when n is less than or equal to N, determining a connection policy between the servers when the servers are fully interconnected; and connecting the M servers according to the determined connection policy to enable the M servers to be fully interconnected.

In this embodiment of this application, the management device first determines, based on the quantity M of the servers in the computing cluster in an optical networking architecture and a quantity of NPUs in each server, the minimum quantity n of computing devices required by each server to implement a full interconnection between the M servers; determines whether the computing cluster supports the full interconnection between the servers; when the computing cluster supports the full interconnection between the servers, determines the connection policy between the servers when the M servers are fully interconnected; and connects the M servers according to the determined connection policy to enable the M servers to be fully interconnected. In other words, this application provides a solution for implementing the full interconnection between the servers included in the computing cluster in the optical networking architecture.

In a possible implementation, the determining a connection policy between the servers when the M servers are fully interconnected includes: determining an identifier of a target server based on an identifier of a source server to which a connection is to be established, an identifier of a source computing device in the source server, and n and/or M. The identifier of the source server is an identifier marked for the source server based on the quantity of servers, and the identifier of the source computing device is an identifier marked for the source computing device based on a quantity of computing devices included in the source server. In this application, the management device may determine the identifier of the target server based on the identifier of the source server to which the connection is to be established, the identifier of the source computing device in the source server, and n and/or M, so that a connection relationship between any two servers in the computing cluster can be determined.

In a possible implementation, the determining an identifier of a target server based on an identifier of a source server to which a connection is to be established, an identifier of a source computing device in the source server, and M includes:

determining the identifier of the target server according to a formula

$$\text{node}_{\text{dst}} = (\text{dev}_{\text{src}} - \text{node}_{\text{src}} + M) \bmod M,$$

where
$\text{node}_{\text{dst}}$ represents the identifier of the target server, $\text{dev}_{\text{src}}$ represents the identifier of the source computing device, and $\text{node}_{\text{src}}$ represents the identifier of the source server. An identifier of a server of a target NPU corresponding to a source NPU in the source server in various scenarios in which quantities of servers and/or quantities of NPUs in the servers are different in an optical networking architecture may be determined by using the formula, so that a connection relationship between servers in the computing cluster may be specifically determined.

In a possible implementation, if M is an even number, the determining an identifier of a target server based on an identifier of a source computing device, a source identifier of a source server, and n includes:

determining the identifier of the target server according to a formula

$$\begin{cases} \text{when } node_{src} = \text{n}, \begin{cases} \text{if } \frac{\text{dev}_{\text{src}}}{2} = \left\lceil \frac{\text{dev}_{\text{src}}}{2} \right\rceil, \text{ node}_{\text{dst}} = \frac{\text{dev}_{\text{src}}+M}{2} \bmod \text{n}; \\ \text{if } \frac{\text{dev}_{\text{src}}}{2} \neq \left\lceil \frac{\text{dev}_{\text{src}}}{2} \right\rceil, \text{ node}_{\text{dst}} = \frac{\text{dev}_{\text{src}}+1}{2} \end{cases} \\ \text{when } (\text{dev}_{\text{src}} + 1 - \text{node}_{\text{src}} + \text{n}) \bmod \text{n} = \text{node}_{\text{src}}, \text{ node}_{\text{dst}} = \text{n}; \\ \text{node}_{\text{dst}} = (\text{dev}_{\text{src}} + 1 - \text{node}_{\text{src}} + \text{n}) \bmod \text{n} \end{cases},$$

where

$\text{node}_{\text{dst}}$ represents the identifier of the target server, $\text{dev}_{\text{src}}$ represents the identifier of the source computing device, and $\text{node}_{\text{src}}$ represents the identifier of the source server. According to the foregoing formula, when the quantity of servers in the computing cluster is an even number, a minimum quantity of NPUs in the server can be used to implement a full connection between servers in scenarios in which quantities of servers and/or quantities of NPUs in the servers are different in an optical networking architecture, thereby reducing a resource loss.

In a possible implementation, the method further includes: performing, by the computing devices in the M servers, computing operations; and determining a data transmission manner based on a connection topology between the computing devices and an aggregation manner of a calculation result. Because the connection topology between the computing device and the aggregation manner of the calculation result are comprehensively considered, a data transmission method with fewer overheads can be determined as soon as possible, thereby reducing power consumption of data transmission.

In a possible implementation, the determining a data transmission manner based on a connection topology between the computing devices and an aggregation manner of a calculation result includes:

when the aggregation manner of the calculation result is all reduce, determining that the data transmission manner is: the source server communicates with the target server based on a send communication operator; a target computing device communicates with a computing device other than the target computing device in the target server based on a broadcast communication operator; and an interconnection is established between the target computing device and the source computing device, where in this embodiment of this application, it is considered that when the aggregation manner of the calculation result is all reduce, only the source computing device sends to-be-transmitted data to the target computing device, and then the target computing device sends the to-be-transmitted data to another computing device in the target server, a case in which system bandwidth utilization is reduced because same to-be-transmitted data on all computing devices in the source server is repeatedly sent can be avoided; in addition, because the broadcast communication operator is used in the target server for communication, it can be ensured that each computing device in the target server can obtain data, thereby avoiding a data loss; or

when each server in the computing cluster has a peer-to-peer communication capability, determining that the data transmission manner is: the source computing device communicates with a computing device other than the source computing device in the source server based on a first preset communication bus and a first peer-to-peer receive communication operator; the source server communicates with the target server based on a send communication operator; and a target computing device communicates with a computing device other than the target computing device in the target server based on a second preset communication bus and a peer-to-peer send communication operator, where because the source server and the target server have the peer-to-peer communication capability, each computing device in the source server may access a memory of any computing device in the server and send data, in this way, the source computing device connected to the target server may be directly used to send data in a memory of another computing device in the source server to the target computing device corresponding to the target server, so that data transmission between the source computing device and the target computing device can be quickly and efficiently implemented; or

when the aggregation manner of the calculation result is not all reduce, and each server in the computing cluster does not have a peer-to-peer communication capability, determining that the data transmission manner is: the source computing device communicates with a computing device other than the source computing device in the source server based on an all gather communication operator; the source server communicates with the target server based on a send communication operator; and a target computing device communicates with a computing device other than the target computing device in the target server based on a scatter communication operator, where because to-be-transmitted data on all computing devices in the source computing device is spliced, and then sent to the target computing device in the target server, a quantity of data transmissions between the source server and the target server is reduced, thereby avoiding network congestion to some extent; or

when the aggregation manner of the calculation result is not all reduce, and each server in the computing cluster does not have a peer-to-peer communication capability, determining that the data transmission manner is: the computing devices in the source server communicate with each other based on a send communication operator and a switching device; the source server communicates with the target server based on a send communication operator; and the computing devices in the target server communicate with each other based on a send communication operator and a switching device, where according to the data transmission method, when a complex topology exists in a server, efficient communication between servers can be implemented by using the switching device.

According to a second aspect, a communication apparatus is provided. The communication apparatus may be the foregoing management device, or a relatively large device including the management device, or a functional module in the management device, for example, a baseband apparatus or a chip system. The communication apparatus may include a corresponding means (means) or module configured to perform the method according to the first aspect. The communication apparatus has a function of implementing behavior in the method embodiment according to the first aspect. For beneficial effects, refer to the descriptions of the first aspect. Details are not described herein again. For example, the communication apparatus includes a processing unit (or referred to as a processing module sometimes) and a transceiver unit (or referred to as a transceiver module sometimes). The transceiver unit can implement a sending function and a receiving function. When the transceiver unit implements the sending function, the transceiver unit may be referred to as a sending unit (or referred to as a sending module sometimes). When the transceiver unit implements the receiving function, the transceiver unit may be referred to as a receiving unit (or referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

The processing module is configured to: determine, based on the quantity M of the servers, a minimum quantity n of computing devices required by each server to implement a full interconnection between the M servers; when n is less than or equal to N, determine a connection policy between the servers when the M servers are fully interconnected; and connect the M servers according to the determined connection policy to enable the M servers to be fully interconnected.

In an optional implementation, the communication apparatus further includes a storage unit. The processing unit can be coupled to the storage unit, and execute a program or instructions in the storage unit, to enable the communication apparatus to perform a function of the management device in the first aspect.

According to a third aspect, a communication apparatus is provided. The communication apparatus may be a management device, or may be a chip or a chip system used in the management device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the management device in the first aspect.

According to a fourth aspect, a computer-readable storage medium is provided. The computer-readable storage medium is configured to store a computer program. When the computer program is run on a computer, the computer is enabled to perform the method according to the first aspect.

According to a fifth aspect, a computer program product is provided. The computer program product includes a computer program. When the computer program is run on a computer, the computer is enabled to perform the method according to the first aspect.

According to a sixth aspect, a chip system is provided, including a processor and an interface. The processor is configured to invoke instructions from the interface and run the instructions. When the processor executes the instructions, the method according to the first aspect is implemented.

## BRIEF DESCRIPTION OF DRAWINGS

FIG. 1 is a diagram of interaction between a server and an electrical switch in an electrical networking architecture;
FIG. 2 is a diagram of interaction between a server and an optical switch in an optical networking architecture;
FIG. 3 is a schematic of pipeline parallel distributed training of a model;
FIG. 4 is a diagram of a data transmission method;
FIG. 5 is a diagram of another data transmission method;
FIG. 6 is a diagram of an application scenario according to an embodiment of this application;
FIG. 7 is a diagram of another application scenario according to an embodiment of this application;
FIG. 8 is a schematic flowchart of a communication method according to an embodiment of this application;
FIG. 9 is a diagram of a computing cluster according to an embodiment of this application;
FIG. 10 is a schematic of a full connection between servers according to an embodiment of this application;
FIG. 11 is another schematic of a full connection between servers according to an embodiment of this application;
FIG. 12 is still another schematic of a full connection between servers according to an embodiment of this application;
FIG. 13 is yet another schematic of a full connection between servers according to an embodiment of this application;
FIG. 14 is a diagram of a data transmission method according to an embodiment of this application;
FIG. 15 is another diagram of a data transmission method according to an embodiment of this application;
FIG. 16 is still another diagram of a data transmission method according to an embodiment of this application;
FIG. 17 is yet another diagram of a data transmission method according to an embodiment of this application;
FIG. 18 is a schematic flowchart of determining a target transmission method of data according to an embodiment of this application;
FIG. 19 is a diagram of a communication method according to an embodiment of this application; and
FIG. 20 is a block diagram of a management device according to an embodiment of this application.

## DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.

(1) In embodiments of this application, a management device may be an independent physical server, or may be a cloud server that provides basic cloud computing services such as a cloud service, a cloud database, cloud computing, a cloud function, cloud storage, a network service, cloud communication, a middleware service, a domain name service, a security service, a content delivery network (content delivery network, CDN), or a big data and an artificial intelligence platform.

In embodiments of this application, an apparatus configured to implement a function of the management device may be the management device, or may be an apparatus, for example, a chip system, that can support the management device in implementing the function. The apparatus may be installed in the management device. In the technical solutions provided in embodiments of this application, an example in which the apparatus configured to implement the function of the management device is the management device is used to describe the technical solutions provided in embodiments of this application.

(2) In embodiments of this application, an artificial intelligence (artificial intelligence, AI) large model is short for an "artificial intelligence pre-training large model", and includes two meanings: "pre-training" and "large model". To be specific, after being pre-trained based on a large-scale dataset, the model can directly support various applications without fine-tuning, or only with fine-tuning of a small amount of data. It should be noted that both the "model" and the "target model" in the following may be understood as an AI large model.

(3) In embodiments of this application, distributed training of the model includes a plurality of training manners such as data parallel distributed training, operator-level model parallel distributed training, pipeline model parallel distributed training, and mixture-of-expert (mixture-of-expert, MOE) parallel distributed training.

The pipeline model parallel distributed training is as follows: A complete model is divided based on a network layer, a plurality of complete network layers form one stage (stage), and each stage is allocated to a different server. Each server includes one or more computing devices (where the computing device is, for example, a neural-network processing unit (neural-network processing unit, NPU) or a graphics processing unit (graphics processing unit, GPU)). The following uses an example in which the computing device is an NPU for description. To be specific, each server includes one or more NPUs, and is allocated with a part of a complete model. The part includes one or more complete network layers.

For example, the model includes 10 convolution layers. Two servers are used for pipeline parallel distributed training. The first five convolution layers are allocated to the first server for training, and the last five convolution layers are allocated to the second server. Evidently, each convolution layer in the model is usually located in one server. A plurality of NPUs in a server all have a part of the layer in the model.

(4) In embodiments of this application, an electrical switching networking architecture includes a computing cluster and an electrical switch. Specifically, a first server in the computing cluster first converts to-be-transmitted data into an optical signal, and transmits the optical signal to a corresponding electrical switch by using an optical fiber communication technology. Then, an optical module in the electrical switch converts the obtained optical signal into an electrical signal, converts the electrical signal into an optical signal, and sends, by using the optical fiber communication technology, the optical signal to a second server in the computing cluster that interacts with the first server, to implement a connection between the first server and the second server.

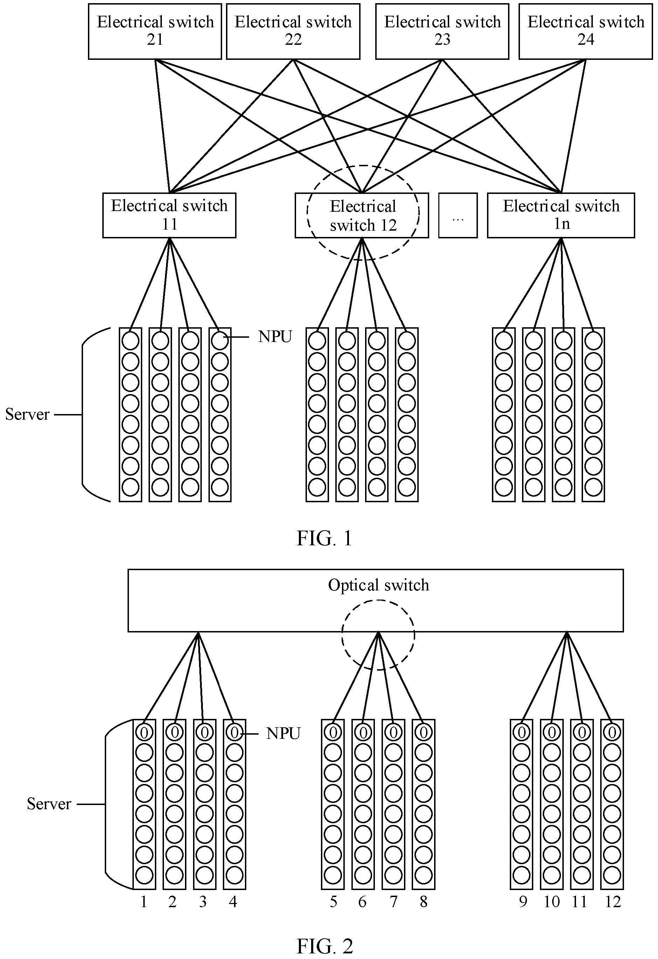

For example, FIG. 1 is a diagram of an electrical switching networking architecture in a conventional technology. FIG. 1 shows an example in which each server includes eight NPUs, and every four servers interact with one electrical switch. An electrical switch 11, an electrical switch 12, ..., and an electrical switch 1n in FIG. 1 may form an access layer at an electrical switching network layer, and the electrical switches at the access layer may implement access requirements of adjacent servers. An electrical switch 21, an electrical switch 22, an electrical switch 23, and an electrical switch 24 in FIG. 1 may form an aggregation layer at the electrical switching network layer, and the electrical switches at the aggregation layer are responsible for high-speed forwarding and communication of all traffic, to implement access requirements of non-adjacent servers. Evidently, in the electrical switching networking architecture in the conventional technology, data exchange between all NPUs in the computing cluster can be implemented by using a plurality of electrical switches, in other words, all NPUs can be fully connected.

(5) In embodiments of this application, an optical networking architecture includes a computing cluster and an optical switch. Specifically, a first server in the computing cluster first converts to-be-transmitted data into an optical signal, and transmits the optical signal to a corresponding optical switch by using an optical fiber communication technology. Because the optical switch is a data exchange device that can directly perform optical signal exchange without performing electrical-to-optical and optical-to-electrical conversion, the optical switch corresponding to the first server may directly transmit the optical signal to a second server in the computing cluster that interacts with the first server, to implement a connection between the first server and the second server. It can be learned that a switching rate of the optical switch is greatly improved.

In addition, a silicon photonic chip integrates an optical component and an electronic component into an independent application-specific integrated circuit (application-specific integrated circuit, ASIC) chip, and uses a laser beam to replace an electronic signal to implement data transmission with a high bandwidth. Therefore, the silicon photonic chip can transmit data at a rate far higher than an electrical signal, in other words, provides an outbound bandwidth of a Tb/s level. The optical switch uses optical cross-connect components to connect data channels. These optical cross-connect components include micro-electro-mechanical system (micro-electro-mechanical system, MEMS) optical fiber port cross-connections, wavelength selective switches (wavelength selective switches, WSSs), and sub-microsecond ($\mu$s) fast optical cross-connections.

For example, FIG. 2 is a diagram of an optical networking architecture. FIG. 2 shows an example in which each server includes eight NPUs, and every four servers interact with one optical switch. Because a direct connection can be established between an NPU numbered 0 in a server numbered 1 and an NPU numbered 0 in a server numbered 2 by using the optical switch, data exchange between the two NPUs is implemented. However, because no direct connection is established between an NPU numbered 0 in a server numbered 5 and the NPU numbered 0 in the server numbered 2 by using the optical switch, data exchange between the two NPUs cannot be implemented. It can be learned that, in the existing optical networking architecture, data exchange can be implemented only between directly connected NPUs. Therefore, even for NPUs located on a same plane (for example, NPUs numbered 0 in servers numbered from 1 to 12 in FIG. 2), only two directly connected NPUs can communicate with each other.

(6) In embodiments of this application, collective communications (collective communications) is a global communication operation in which all processes in a process group participate. Specifically, the collective communications abstracts a typical communication behavior between NPUs/graphics processing units (graphics processing units, GPUs), to greatly simplify model development.

The collective communications includes a plurality of communication operators, which may be specifically: a send (send) communication operator and a receive (receive) communication operator, a broadcast (broadcast) communication operator, a gather (gather) communication operator, an all gather (all gather) communication operator, a scatter (scatter) communication operator, a reduce (reduce) communication operator, an all reduce (all reduce) communication operator, an all-to-all (All-To-All) communication operator, and the like.

Broadcast is a one-to-many communication operator. To be specific, one data sender corresponds to a plurality of data receivers. For example, data of an NPU may be broadcast to another NPU in a server.

Scatter is also a one-to-many communication operator, also indicating that one data sender corresponds to a plurality of data receivers. For example, data of an NPU may be sliced in a server and then the sliced data is distributed to all NPUs in the server.

Gather is a many-to-one communication operator, and has a plurality of data senders and one data receiver. For example, data of a plurality of NPUs in a server may be gathered to one NPU.

AllGather is a many-to-many communication operator, and has a plurality of data senders and a plurality of data receivers. For example, data of a plurality of NPUs may be gathered (Gather) to a master NPU in a server, and then the gathered data is distributed to other NPUs.

Reduce is a many-to-one communication operator, and has a plurality of data senders and one data receiver. For example, a reduce operation can be performed on data of a plurality of NPUs to a master NPU in a server. Commonly used reduce operators include: cumulative sum (SUM), cumulative product (PROD), maximum value (MAX), minimum value (MIN), logical AND (LAND), bitwise AND (BAND), logical OR (LOR), bitwise OR (BOR), logical exclusive OR (LXOR), bitwise exclusive OR (BXOR), locations of a maximum value and a maximum value (MAXLOC), locations of a minimum value and a minimum value (MINLOC), and the like. It should be noted that the foregoing reduce operation takes effect only when an accelerator card supports a corresponding operator.

AllReduce is a many-to-many communication operator, and has a plurality of data senders and a plurality of data receivers. For example, a same reduce operation is performed on all NPUs in a server, and results obtained by performing the reduce operation on the data of all the NPUs in a cluster may be sent to all the NPUs.

All-To-All is a many-to-many communication operator, and has a plurality of data senders and a plurality of data receivers. For example, data of each NPU is scattered to all NPUs in a server, and each NPU also gathers data of all the NPUs in the cluster.

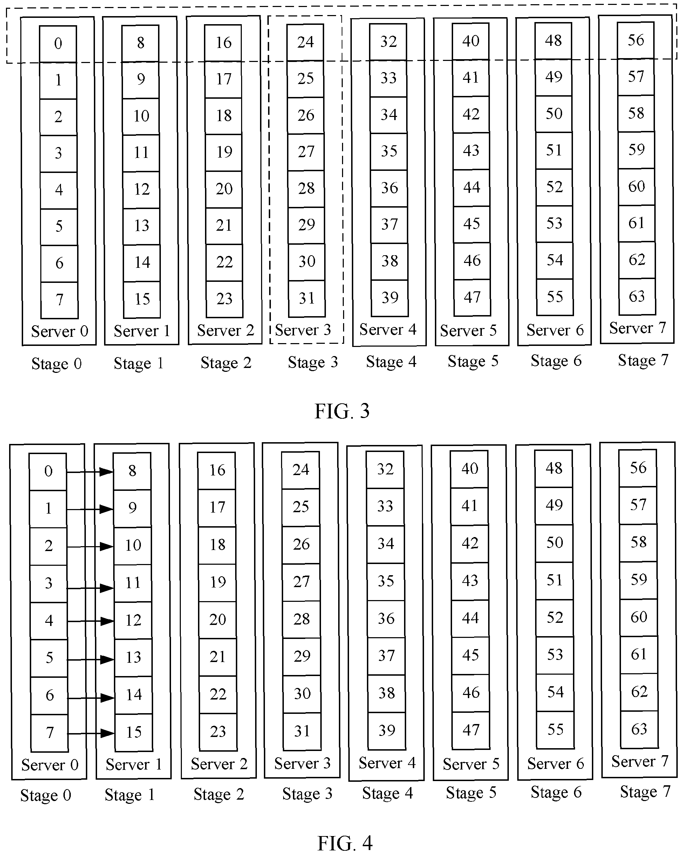

The following briefly describes use of the send communication operator and the receive communication operator with reference to FIG. 3.

For example, FIG. 3 shows an example in which a computing cluster includes eight servers, and each server may provide eight NPUs. A complete target model includes a plurality of network layers, the plurality of network layers are divided into eight stages (for example, a stage 0 to a stage 7 in FIG. 3), and each stage is deployed on a corresponding server. As shown in FIG. 3, the stage 0 is deployed on a server 0 including NPUs numbered from 0 to 7, the stage 1 is deployed on a server 1 including NPUs numbered from 8 to 15, the stage 2 is deployed on a server 2 including NPUs numbered from 16 to 23, the stage 3 is deployed on a server 3 including NPUs numbered from 24 to 31, the stage 4 is deployed on a server 4 including NPUs numbered from 32 to 39, the stage 5 is deployed on a server 5 including NPUs numbered from 40 to 47, the stage 6 is deployed on a server 6 including NPUs numbered from 48 to 55, and the stage 7 is deployed on a server 7 including NPUs numbered from 56 to 63.

Specifically, the eight stages are run on the eight servers in a manner of pipeline model parallel distributed training, in other words, each server runs one stage in a pipeline.

In a network topology shown in FIG. 3, when the pipeline model parallel distributed training is performed on the target model, the target model mainly includes three communication domains. Refer to Table 1.

**Table 1**

| Communication domain | Intra-domain (NPU numbered 16 is used as an example) | Collective communications type |
|---|---|---|
| Eight NPUs between servers (pipeline parallel communication domain) | 0-8-16-24-32-40-48-56 | Send/Recv |

(continued)

| Communication domain | Intra-domain (NPU numbered 16 is used as an example) | Collective communications type |
|---|---|---|
| Eight NPUs in a server (operator-level model parallelism communication domain) | 16-17-18-19-20-21-22-23 | AllReduce |
| | | AllGather |
| | | ReduceScatter |
| 64 NPUs globally | 0-1-2-...-63 | AllReduce |

Still refer to FIG. 3. If the NPUs between the servers in the computing cluster can be fully connected, the NPU numbered 16 (an NPU 16 for short) is used as an example, data may be transmitted between the NPU 16 and NPUs that are on a same plane as the NPU 16 based on a send/receive communication operator. The NPUs that are on the same plane as the NPU 16 are the NPU 0, the NPU 8, the NPU 24, the NPU 32, the NPU 40, the NPU 48, and the NPU 56. For example, the NPU 16 may send, to the NPU 24 by using the send communication operator, data that needs to be sent by the NPU 16, and the NPU 24 may receive the data by using the receive communication operator.

In this application, a quantity of nouns, unless otherwise specified, means "singular nouns or plural nouns", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one of a, b, or c indicates a, b, c, a and b, a and c, b and c, or a, b, and c, where a, b, and c may be singular or plural.

Terms such as "source" and "target" mentioned in embodiments of this application are merely used for an objective of relative description. For example, for a source NPU and a target NPU, at a next moment, the "source NPU" may be a target NPU of another NPU, or the "target NPU" may be a "source NPU" of a new NPU.

In embodiments of this application, terms such as "first" and "second" are merely used for distinguishing, but cannot be understood as an indication or implication of relative importance, or as an indication or implication of a sequence. For example, a first server and a second server may be a same server, or may be different servers, and these names do not indicate that the two servers have different application scenarios, priorities, importance degrees, or the like.

Reference to "an embodiment", "some embodiments", or the like described in this specification indicates that one or more embodiments of this specification include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

After some terms in this application are described, to facilitate understanding of usage scenarios of the solutions provided in this application, the following describes a conventional technology related to communication between NPUs in this application.

Currently, due to distributed training of a large model, a high requirement is imposed on a bandwidth between NPUs, and therefore a high requirement is imposed on a capacity of an electrical switch.

Table 2 shows a development trend of a capacity of an electrical switch.

**Table 2**

| Year | 2014 | 2016 | 2018 | 2020 | 2022 |
|---|---|---|---|---|---|
| Quantity of SerDes channels | 128 | 256 | 256 | 512 | 256 |
| SerDes rate (Gb/s) | 25 | 25 | 50 | 50 | 100 |
| Capacity of a switch (Tb/s) | 3.2 | 6.4 | 12.8 | 25.6 | 25.6 |

Evidently, a development trend of a serializer/deserializer (serializer/deserializer, SerDes) technology indicates that further expansion of the capacity of the electrical switch faces a capacity "wall". As a result, it is difficult for the electrical switch to implement a Tb/s-level bandwidth of a single port. Specifically, the capacity "wall" of the SerDes is mainly reflected as follows.

First, if the capacity of the electrical switch is increased by increasing the SerDes rate, a transmission loss of an electrical signal is significantly increased due to the SerDes rate, and power consumption is increased.

Second, costs of an optical module in the electrical switch also become an important issue. Different from an electrical switching chip, a large part of the costs of the optical module lies in encapsulation, and a capacity of the optical module does not increase with the improvement of the semiconductor technology. Therefore, investment costs of the optical module also tend to exceed those of a switch.

Third, to resolve a heat dissipation problem caused by an increase in power consumption and accommodate more hot-swap optical modules, a size of the switch is significantly increased, and further, the electrical switch cannot match a current standard rack specification.

It can be learned that, although an electrical switching networking architecture can implement a full connection between NPUs, there are problems such as an increased loss, increased costs, and a failure in matching a rack specification. Therefore, it is considered to use an optical switching networking architecture to perform communication between the NPUs.

However, although an optical networking architecture can satisfy the high requirement of the bandwidth between the NPUs for the distributed training of the large model, and does not have a plurality of problems in the electrical switching networking architecture, in the conventional technology, a solution for a connection between the NPUs in the optical networking architecture is not provided.

Therefore, how to implement a full connection between all NPUs in the optical networking architecture is an urgent technical problem to be resolved.

In addition, in the conventional technology, the large model mainly processes communication between stages in the following two manners.

First processing manner:

When two stages are located on different servers, if data transmission needs to be performed between the two stages, a send/receive communication operator is used for communication.

For example, FIG. 4 shows an example in which a computing cluster includes eight servers, and each server may provide eight NPUs. A complete target model includes a plurality of network layers, the plurality of network layers are divided into eight stages (for example, a stage 0 to a stage 7 in FIG. 4), each stage is deployed on a corresponding server, and NPUs included in all servers are numbered in a sequence starting from 0.

Still refer to FIG. 4. When a server 0 deployed with the stage 0 communicates with a server 1 deployed with the stage 1, an NPU numbered 0 in the server 0 sends, by using a send communication operator, to-be-transmitted data corresponding to the NPU numbered 0 to an NPU numbered 8 in the server 1, and the NPU numbered 8 receives the to-be-transmitted data by using a receive communication operator. To be specific, each NPU in the server 0 sends, by using the send communication operator, the to-be-transmitted data to an NPU that is in the server 1 and that is on a same plane as the NPU in the server 0. The NPU receives the to-be-transmitted data by using the receive communication operator, to implement data transmission between the stage 0 to the stage 7.

Second processing manner:

When two stages are on a same server, a broadcast communication operator is used for communication.

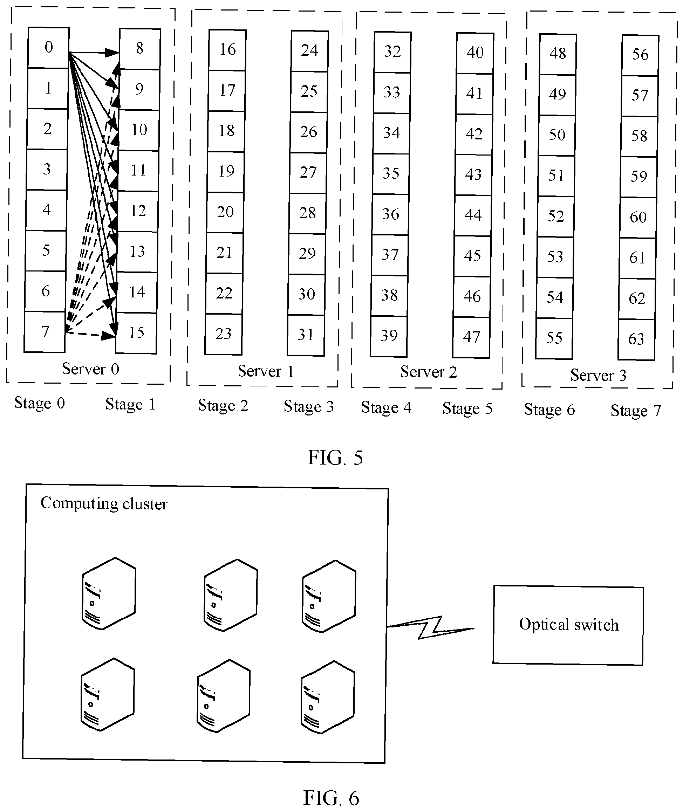

For example, refer to FIG. 5. A stage 0 and a stage 1 in FIG. 5 are deployed on a server 0. When the stage 0 communicates with the stage 1, in other words, when NPUs in the server 0 communicate with each other, NPUs numbered 0 to 7 need to separately send, by using the broadcast communication operator, to-be-transmitted data corresponding to the NPUs numbered 0 to 7 to NPUs numbered 8 to 15, to implement data transmission between the NPUs in the server 0.

However, if the foregoing two communication solutions are applied to the optical networking architecture, when the stages are located on different servers, there may be no directly connected link between the two stages, and the send/receive communication operator cannot be used for communication.

Therefore, how to implement a full connection between all servers in the optical networking architecture to efficiently implement data transmission between the NPUs is a technical problem that needs to be urgently resolved.

In view of this, the technical solutions in embodiments of this application are provided. In embodiments of this application, a full-connection policy between servers is designed. A solution for a connection between servers can be quickly determined according to the policy, so that the servers can communicate with each other in the optical networking architecture. The policy is applicable to scenarios of different quantities of servers and different quantities of computing devices in the servers. In addition, while a full connection between the servers in the optical networking architecture is implemented, in this application, a connection topology between computing devices and an aggregation manner of a calculation result are further comprehensively considered. Therefore, a data transmission manner with low overheads can be determined as soon as possible, thereby reducing power consumption of data transmission between NPUs.

The communication method provided in embodiments of this application may be applied to various communication systems, for example, an IoT system, a narrowband internet of things (narrowband internet of things, NB-IoT) system, or a 4th generation (4th generation, 4G) mobile communication technology system (for example, an LTE system), or may be applied to a 5G communication system, for example, an NR system, or may be applied to a hybrid architecture of 4G and 5G, or may be applied to a future communication system, for example, a 6th generation (6th generation, 6G) mobile communication technology system. It should be understood that a network architecture and a service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

FIG. 6 is a diagram of an application scenario according to an embodiment of this application. The diagram of the scenario shown in FIG. 6 includes a computing cluster and an optical switch. A server in the computing cluster can communicate with the optical switch. For an implementation of communication between the server in the computing cluster and the optical switch, refer to the foregoing implementation in the optical networking architecture. Details are not described herein again. It should be noted that, in an actual implementation process, the computing cluster may include a plurality of servers, for example, 20 or 35 servers. This is not limited herein. FIG. 6 shows an example in which the computing cluster includes six servers. In addition, in an actual implementation process, there may be a plurality of optical switches. One optical switch is used as an example in FIG. 6. A quantity of optical switches is not limited in this application either.

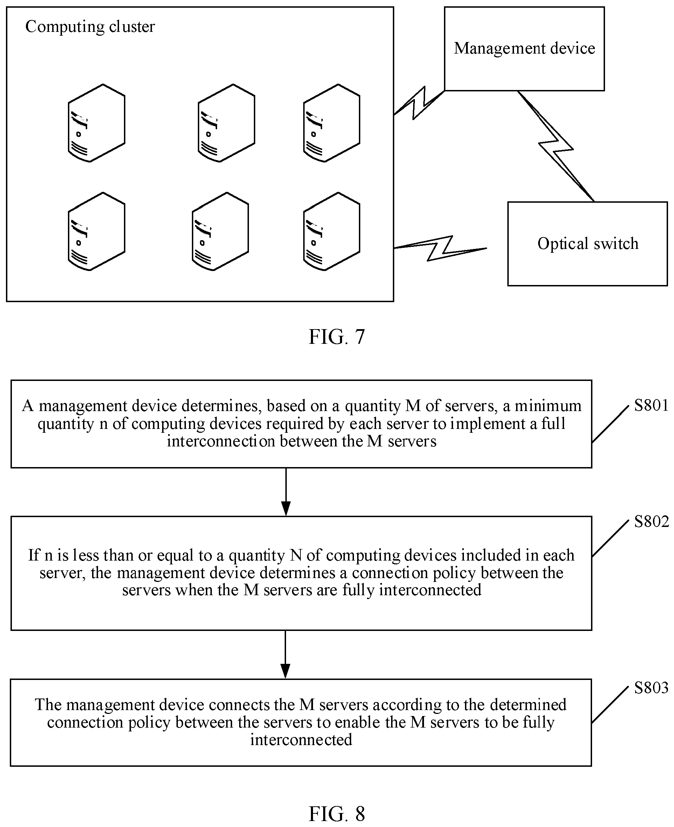

FIG. 7 is a diagram of another scenario according to an embodiment of this application. The diagram of the scenario shown in FIG. 7 includes a computing cluster, an optical switch, and a management device. A server in the computing cluster can communicate with the optical switch, the optical switch can communicate with the management device, and the server in the computing cluster can communicate with the management device. For an implementation of communication between the server in the computing cluster and the optical switch, refer to the foregoing implementation in the optical networking architecture. Details are not described herein again. The management device is configured to perform the method provided in embodiments of this application. Details are described below, and not described herein again.

The following describes the method provided in embodiments of this application with reference to the accompanying drawings. The method provided in embodiments of this application may be applied to network architectures shown in FIG. 6 and FIG. 7. For example, the management device in the method is any server in FIG. 6 or the management device in FIG. 7, and the computing cluster in the method is the computing cluster in FIG. 6 and FIG. 7. A network structure shown in FIG. 6 is used as an example in the following, in other words, an example in which any server in the computing cluster carries a function of the management device is used for description.

FIG. 8 is a flowchart of a communication method according to an embodiment of this application.

S801: A management device determines, based on a quantity M of servers, a minimum quantity n of computing devices required by each server to implement a full interconnection between the M servers.

The management device may determine topology information of a computing cluster used for supporting target model pre-training. The topology information includes the quantity M of servers in the computing cluster and a quantity N of neural-network processing units NPUs in each server.

For example, the computing cluster includes eight servers, and each server includes eight NPUs. For another example, the computing cluster includes eight servers, and each server includes seven NPUs. For still another example, the computing cluster includes seven servers, and each server includes seven NPUs.

Optionally, when the quantity M of the servers in the computing cluster is an odd number, on a single plane (for example, a plane formed by first NPUs in all servers), when every two NPUs are interconnected, there is one NPU left that cannot be connected to another NPU. To be specific, if a source NPU and a target NPU are referred to as a connection, a quantity of connections on a single plane is reduced to $(M-1)/2$. Therefore, each server requires at least M NPUs to implement a full interconnection between servers on a plurality of planes.

Optionally, when the quantity of the servers in the computing cluster is an even number, each plane can provide $M/2$ connections. Therefore, at least $M-1$ NPUs are required in each server to complete a full connection between servers. For example, when M is 8, at least seven NPUs are required in each server to implement a full interconnection between servers on a plurality of planes, and a total quantity of connections is 28.

In the following, for ease of description, a quantity of NPUs required by each server when the servers in the computing cluster are fully interconnected is denoted as n. M, N, and n are positive integers.

For example, when the quantity of the servers in the computing cluster is 8, each server requires at least seven NPUs (in other words, the server needs to be connected to other seven servers) to implement the full interconnection between the servers, so that a value of n is 7. For another example, when the quantity of the servers in the computing cluster is 7, each server requires at least seven NPUs (in other words, the server needs to be connected to other six servers) to implement the full interconnection between the servers, so that a value of n is 7.

After determining the minimum quantity n of the NPUs required by each server when the servers in the computing cluster are fully interconnected, the management device may determine a relationship between n and N. If n is not less than N, the management device determines that the servers in the computing cluster do not support the full interconnection, and may consider selecting a new computing cluster to provide a service for training of a large model.

S802: If n is less than or equal to a quantity N of computing devices included in each server, the management device determines a connection policy between the servers when the M servers are fully interconnected.

When determining that the computing cluster supports the full interconnection, the management device may determine identifiers of the servers and identifiers of the NPUs in each server.

In this embodiment of this application, there are two identifiers: one is an identifier of a computing device, and the other is an identifier of a server. The identifier of the computing device may be understood as a number of each NPU in the server. For example, an identifier of a source computing device is an identifier marked for the source computing device based on a quantity of computing devices included in a source server. If the source server includes eight NPUs, each NPU may be used as a source computing device, and identifiers corresponding to the NPUs may be 0, 1, 2, 3, 4, 5, 6, and 7. The identifier of the server may be understood as a number of each server in the computing cluster. For example, an identifier of a source server is a quantity marked for the source server based on a quantity of servers included in the computing cluster. If the computing cluster includes seven servers, each server may be used as a source server, and identifiers corresponding to the source servers are 0, 1, 2, 3, 4, 5, and 6.

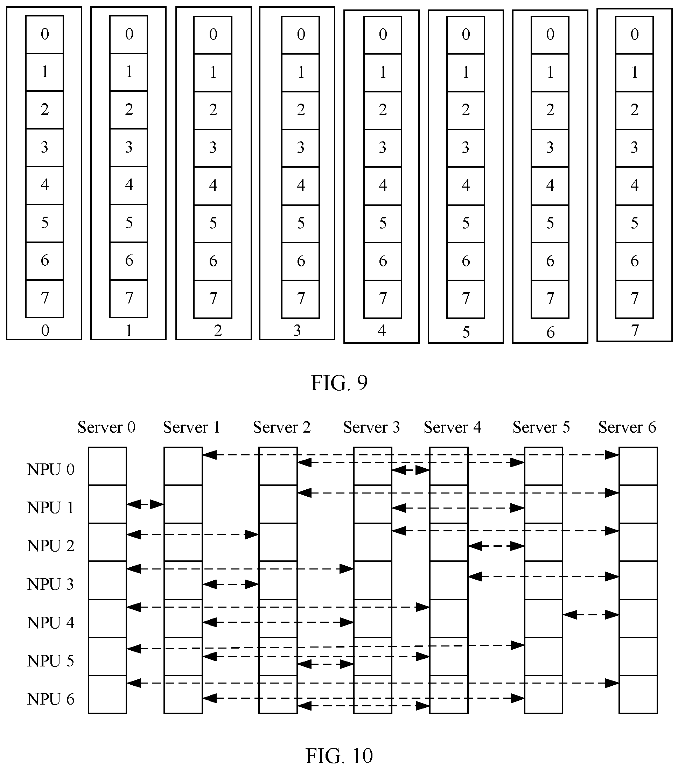

For example, FIG. 9 is a diagram of a computing cluster according to an embodiment of this application. The computing cluster includes eight servers, and each server includes eight NPUs. Any one of the eight servers is numbered 0, and other servers are numbered in sequence. Any NPU in each server is numbered 0, and other NPUs are numbered in sequence.

In this embodiment of this application, any server in the computing cluster may be used as a source server, any NPU in the source server may be used as a source NPU, an NPU that has an interconnection relationship with the source NPU is used as a target NPU, and a server in which the target NPU is located is used as a target server. The management device may determine an identifier of the target processor based on an identifier of the source NPU, an identifier of the source server, and M.

Optionally, the management device may determine the identifier of the target server according to the following Formula 1:

$$\mathrm{node_{dst}} = (\mathrm{dev_{src}} - \mathrm{node_{src}} + M) \bmod M \qquad \text{Formula 1}$$

$\mathrm{node_{dst}}$ represents the identifier of the target server, $\mathrm{dev_{src}}$ represents the identifier of the source NPU, and $\mathrm{node_{src}}$ represents the identifier of the source server.

In this embodiment of this application, it is considered that an optical switch can implement a connection between NPUs on a same plane, and the following Formula 2 may be used as a prerequisite of an interconnection formula, that is, Formula 1:

$$\mathrm{dev_{dst}} = \mathrm{dev_{src}} \qquad \text{Formula 2}$$

$dev_{dst}$ represents an identifier of the target NPU. Specifically, the NPUs on the same plane are set to have a same number, in other words, two interconnected NPUs (that is, a source NPU and a target NPU) have a same identifier (number) in corresponding servers.

Certainly, the precondition may not need to be performed. For example, still refer to FIG. 9. An NPU whose identifier is 0 in a server whose identifier is also 0 may be connected to NPUs whose identifiers are 1 in servers whose identifiers are 1 to 7, an NPU whose identifier is 1 in the server whose identifier is 0 may be connected to NPUs whose identifiers are 2 in the servers whose identifiers are 1 to 7, and so on. Alternatively, another connection manner or the like may be used. This is not limited in this application.

The following describes a solution for determining an identifier of a target server by using an example in which numbers of a source NPU and a target NPU in corresponding servers are consistent.

The following describes the solution for determining the identifier of the target server with reference to the accompanying drawings.

FIG. 10 is a schematic of a full connection between servers according to an embodiment of this application. A computing cluster includes seven servers, and each server includes seven NPUs, that is, M is equal to 7. In an example in which a number of a source server is 0 (a server 0 in FIG. 10), identifiers of target servers of target NPUs interconnected to NPUs included in the source server are calculated.

Still refer to FIG. 10. If an identifier of a source NPU is 0, the identifier of the source NPU being 0, an identifier of the source server being 0, and M being 7 are substituted into Formula 1, so that the identifier of the target server is 0. In other words, the source NPU is not connected to an NPU in another server in the computing cluster. Identifiers of source NPUs in the source server are substituted into formula 1 in sequence, to determine identifiers of target NPUs corresponding to the NPUs in the source server whose identifier is 0.

It can be learned that, in a network topology in which a quantity of servers is an odd number and a quantity of NPUs included in each server is also an odd number, an identifier of a target server corresponding to a source server may be determined according to Formula 1, to establish a full connection between the servers.

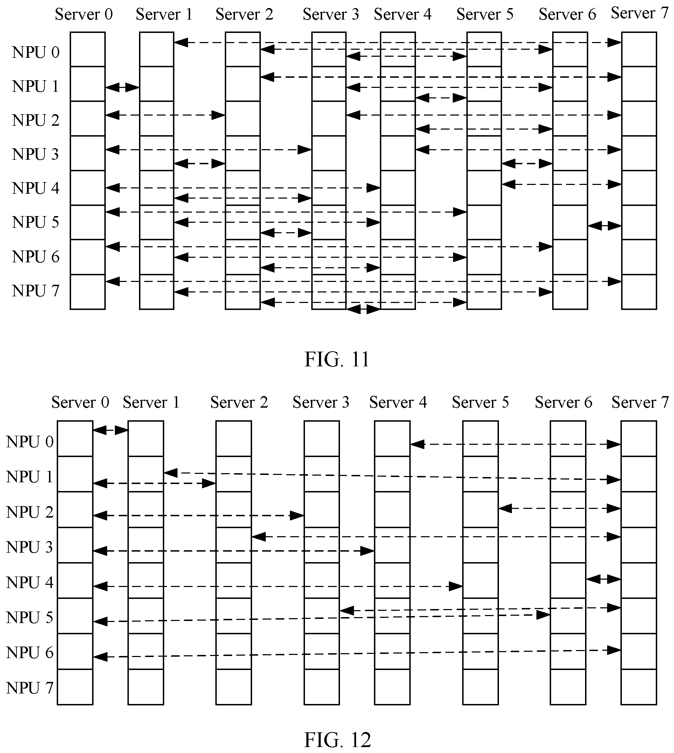

FIG. 11 is a schematic of another full connection between NPUs according to an embodiment of this application. A computing cluster includes eight servers, and each server includes eight NPUs. In other words, a scenario shown in FIG. 11 includes an even quantity of servers, and each server includes an even quantity of NPUs.

In an example in which an identifier of a source server is 7 (a server 7 in FIG. 11), identifiers of target servers of target NPUs interconnected to NPUs included in the source server are calculated. If an identifier of a source NPU is 0, the identifier of the source NPU being 0, the identifier of the source server being 7, and M being 8 are substituted into Formula 1, so that the identifier of the target server is 1. In other words, the source NPU is interconnected to an NPU whose identifier is 0 in the target server whose identifier is 1. Identifiers of source NPUs in the source server are determined in sequence, and are substituted into Formula 1, to determine identifiers of target servers of target NPUs corresponding to the NPUs in the source server whose identifier is 7.

It can be learned that, in a network topology in which a quantity of servers is an even number and a quantity of NPUs included in each server is also an even number, an identifier of a target server corresponding to a source server may be determined according to Formula 1, to establish a full connection between the servers.

In this embodiment of this application, when M is an even number, because a quantity of NPUs required in each server is less than a quantity of NPUs in each server when a full interconnection between servers of an even quantity is constructed, although an identifier of a target server may be determined by using Formula 1, a large quantity of NPUs are used, causing a waste of resources. In view of this, if M is an even number, the following Formula 3 may be used to determine the identifier of the target server:

$$\begin{cases} \text{when } node_{src} = \text{n}, \begin{cases} \text{if } \frac{\text{dev}_{src}}{2} = \left\lceil \frac{\text{dev}_{src}}{2} \right\rceil, \ node_{dst} = \frac{\text{dev}_{src}+M}{2} \ \text{mod n}; \\ \text{if } \frac{\text{dev}_{src}}{2} \neq \left\lceil \frac{\text{dev}_{src}}{2} \right\rceil, \ node_{dst} = \frac{\text{dev}_{src}+1}{2} \end{cases} \quad (1) \\ \text{when } (\text{dev}_{src}+1-node_{src}+\text{n}) \ \text{mod n} = node_{src}, \ node_{dst} = \text{n}; \ (2) \\ node_{dst} = (\text{dev}_{src}+1-node_{src}+\text{n}) \ \text{mod n} \ (3) \end{cases}$$

Formula

3

$node_{dst}$ represents the identifier of the target server, $\text{dev}_{src}$ represents the identifier of the source computing device, and $node_{src}$ represents the identifier of the source server.

In a possible implementation, Formula (2) and Formula (3) in Formula 3 may be combined, and the identifier of the target server may be determined according to the following formula:

when

$$node_{src} = \text{n}, \text{if } \frac{\text{dev}_{src}}{2} = \left\lceil \frac{\text{dev}_{src}}{2} \right\rceil, node_{dst} = \frac{\text{dev}_{src}+M}{2} \ \text{mod n},$$

if

$$\frac{\text{dev}_{src}}{2} \neq \left\lceil \frac{\text{dev}_{src}}{2} \right\rceil, \ node_{dst} = \frac{\text{dev}_{src}+1}{2};$$

or

$$node_{dst} = (\text{dev}_{src}+1-node_{src}+\text{n}) \ \text{mod n};$$

if

$$node_{dst} = node_{src}, \ node_{dst} = \text{n}.$$

In a possible implementation, Formula 3 may be transformed, to be specific, the identifier of the target server may be determined according to the following formula:

$$
\begin{cases}
\text{when node}_{\text{src}} = n, \begin{cases} \text{if } \dfrac{\text{dev}_{\text{src}}}{2} = \left\lceil \dfrac{\text{dev}_{\text{src}}}{2} \right\rceil \text{ and dev}_{\text{src}} \neq n-1, \text{ node}_{\text{dst}} = \dfrac{\text{dev}_{\text{src}} + M}{2}, \\ \text{if } \dfrac{\text{dev}_{\text{src}}}{2} = \left\lceil \dfrac{\text{dev}_{\text{src}}}{2} \right\rceil \text{ and dev}_{\text{src}} = n-1, \\ \text{node}_{\text{dst}} = (\text{dev}_{\text{src}} + 1 - \text{node}_{\text{src}} + n) \bmod n, \\ \text{if } \dfrac{\text{dev}_{\text{src}}}{2} \neq \left\lceil \dfrac{\text{dev}_{\text{src}}}{2} \right\rceil, \text{ node}_{\text{dst}} = \dfrac{\text{dev}_{\text{src}} + 1}{2} \\ \quad ; (1) \end{cases} \\
\text{when } (\text{dev}_{\text{src}} + 1 - \text{node}_{\text{src}} + n) \bmod n = \text{node}_{\text{src}}, \text{ node}_{\text{dst}} = n; (2) \\
\text{node}_{\text{dst}} = (\text{dev}_{\text{src}} + 1 - \text{node}_{\text{src}} + n) \bmod n \ (3)
\end{cases}
$$

Certainly, in an actual implementation process, a plurality of variations may be further made to Formula 3. This is not limited in this application.

In this embodiment of this application, it is considered that the optical switch can implement the connection between the NPUs on the same plane, the foregoing formula may be used as a prerequisite of an interconnection formula, that is, Formula 3. For Formula 2, refer to the foregoing descriptions. Details are not described herein again. To be specific, identifiers (numbers) of two interconnected NPUs (that is, a source NPU and a target NPU) in corresponding servers being consistent may be used as a prerequisite for executing Formula 3.

To describe the solution provided for determining the identifier of the target server according to Formula 3 more clearly, the following provides detailed descriptions with reference to FIG. 12.

FIG. 12 is a schematic of a full connection between servers according to an embodiment of this application. A computing cluster includes eight servers, and each server includes eight NPUs, that is, M is equal to 8.

Specifically, in an example in which an identifier of a source server is 7 (a server 7 in FIG. 12), identifiers of target servers of target NPUs interconnected to NPUs included in the source server are calculated. To be specific, the identifier of the source server is 7 ($\text{node}_{\text{src}} = 7$) and a minimum quantity ($n = 7$) of NPUs required by each server that is determined by a management device to achieve a full interconnection between the eight servers is the same. This satisfies Formula (1) in Formula 3.

If an identifier of a source NPU is 0, that is, $\text{dev}_{\text{src}}$ is an even number, the identifier of the source NPU being 0 ($\text{dev}_{\text{src}}=0$), the quantity (M=8) of the servers in the computing cluster, and the minimum quantity ($n = 7$) of the NPUs required by each server that is determined by the management device to implement the full interconnection between the eight servers are substituted into $\text{node}_{\text{dst}} = \dfrac{\text{dev}_{\text{src}}+M}{2} \bmod n$, so that it is determined that the identifier of the target server is 4. In other words, the source NPU is interconnected to an NPU whose identifier is 0 in a target server whose identifier is 4. If the identifier of the source NPU is 1, that is, $\text{dev}_{\text{src}}$ is an odd number, the identifier of the source NPU being 1 ($\text{dev}_{\text{src}} = 1$) is substituted into $\text{node}_{\text{dst}} = \dfrac{\text{dev}_{\text{src}}+1}{2}$, so that it is determined that the identifier of the target server is 1. In other words, the source NPU is connected to an NPU whose identifier is 1 in a target server whose identifier is 1. Identifiers of source NPUs in the source server are determined in sequence. When being an even number, the identifier of the source NPU is substituted into $\text{node}_{\text{dst}} = \dfrac{\text{dev}_{\text{src}}+M}{2} \bmod n$; when being an odd number, the identifier of the source NPU is substituted into $\text{node}_{\text{dst}} = \dfrac{\text{dev}_{\text{src}}+1}{2}$, to determine the identifiers of the target NPUs corresponding to the NPUs in the source server whose identifier is 7. If the identifier of the source NPU is 7, it is determined that the source NPU is not connected to another NPU, or a user sets the identifier.

Specifically, in an example in which an identifier of a source server is 0 (a server 0 in FIG. 12), identifiers of target servers of target NPUs interconnected to NPUs included in the source server are calculated. Specifically, the quantity of the servers in the computing cluster is 8 (that is, M=8), the identifier of the source server is 0 (that is, $\text{node}_{\text{src}}=0$), and the minimum quantity of the NPUs required by each server that is determined by the management device to implement the full interconnection between the eight servers is 7 ($n = 7$). Evidently, $n$ is not equal to $\text{node}_{\text{src}}$, in other words, this does not satisfy Formula (1) in Formula 3.

If the identifier of the source NPU is 0, it is determined that Formula (2) in Formula 3 is not satisfied, and it is determined, according to Formula (3) in Formula 3, that the identifier of the target server is 1. In other words, the source NPU is interconnected to an NPU whose identifier is 0 in the target server whose identifier is 1. If the identifier of the source NPU is 1, it is determined that Formula (2) in Formula 3 is not satisfied, and it is determined, according to Formula (3) in Formula 3, that the identifier of the target server is 2. In other words, the source NPU is interconnected to an NPU whose identifier is 1 in the target server whose identifier is 1. Identifiers of source NPUs in the source server are determined in sequence, and the identifiers of the target servers of the target NPUs corresponding to the NPUs in the source server whose identifier is 0 are determined according to Formula (3) in Formula 3. If the identifier of the source NPU is 7, it is determined that the source NPU is not connected to another NPU, or a user sets the identifier.

It can be learned that, in a network topology in which a quantity of servers is an even number and a quantity of NPUs included in each server is also an even number, an identifier of a target server corresponding to a source server may be determined according to Formula 3. In comparison with the manner shown in FIG. 11 in which a full connection between servers in a computing cluster is implemented with seven NPUs in each server according to Formula 1, in the manner in which a full connection between servers in a computing cluster is implemented with six NPUs in each server according to Formula 3, a waste of NPU resources is reduced.

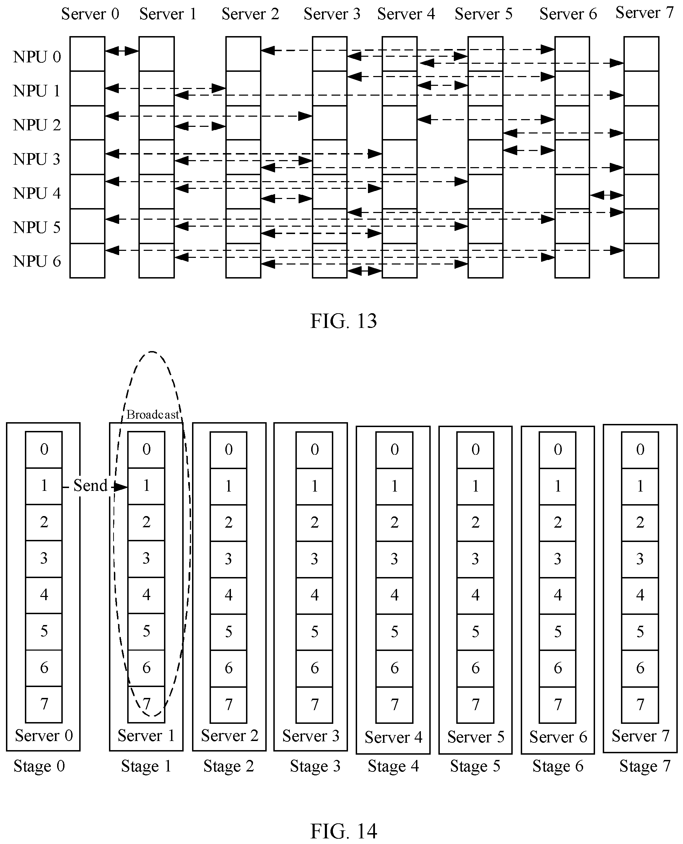

For another example, FIG. 13 is a schematic of a full connection between servers according to an embodiment of this application. A computing cluster includes eight servers, and each server includes seven NPUs, that is, M is equal to 8, and N is equal to 7. Specifically, Formula 1 or Formula 3 may be used to determine a connection relationship of NPUs for implementing a full interconnection between servers. Details are not described herein again.

It can be learned that, in a network topology in which a quantity of servers is an even number and a quantity of NPUs included in each server is an odd number, an identifier of a target server corresponding to a source server may be determined according to Formula 3, and a minimum quantity of NPUs is used to implement the full connection between the servers, thereby reducing a waste of NPU resources.

In conclusion, according to the connection policy between servers provided in this embodiment of this application, in a scenario in which any computing cluster includes any quantity, and each server includes any quantity of NPUs, a minimum quantity of NPUs may be used to implement a full interconnection between the servers. In this way, in an optical networking architecture, a high requirement of a large model on NPUs is satisfied without a loss increased.

In this embodiment of this application, after determining the identifier of the target server, the management device may perform S803: The management device connects the M servers according to the determined connection policy between the servers to enable the M servers to be fully interconnected.

Optionally, the management device may further control computing devices in the M servers to perform computing operations, and determine a data transmission manner based on a connection topology between the computing devices and an aggregation manner of a calculation result.

The following uses examples to describe data transmission manners provided in this application.

First data transmission manner:

If determining that the aggregation manner of the calculation result is all reduce, the management device determines that the data transmission manner is: the source server communicates with the target server based on a send communication operator; a target computing device communicates with a computing device other than the target computing device in the target server based on a broadcast communication operator; and an interconnection is established between the target computing device and the source computing device. The broadcast communication operator is, for example, broadcast in the foregoing term explanation part, and the send communication operator is, for example, send in the foregoing term explanation part. Details are not described herein again.

When data is transmitted based on the first data transmission method, for specific implementation, refer to FIG. 14. It is assumed that a server 0 deployed with a stage 0 is a source server. Because the server 0 performs an all gather operation when compiling a corresponding network layer (that is, the stage 0) in a target model, data sent by NPUs in the server 0 to NPUs corresponding to a server 1 deployed with a stage 1 is the same. Therefore, the server 0 may send data only on a source NPU (for example, an NPU whose identifier is 1 in FIG. 14) that establishes an optical channel with the server 1 deployed with the stage 1. After the data reaches a target NPU whose identifier is 1 in the server 1, the target NPU sends the data to NPUs in the server 1 (for example, NPUs numbered "0 and 2 to 7" in the server 1 in FIG. 14) based on the broadcast communication operator.

It can be learned that, in the first data transmission method, a communication process between two stages may include two steps. In a first step, the send communication operator (or referred to as a Send communication operator) is executed between servers, and in a second step, the broadcast communication operator (or referred to as a Broadcast communication operator) is executed in a next server.

In the first data transmission method, because the source NPU transmits same to-be-transmitted data to the target server only once, an operation of repeatedly sending, by NPUs in the source server, the to-be-transmitted data to target NPUs in the target server is avoided. Therefore, system bandwidth utilization can be improved, and network congestion can be avoided.

Second data transmission method:

In embodiments of this application, if the management device determines that each server in the computing cluster has a peer-to-peer communication capability, the management device determines that the data transmission manner is: The source computing device communicates with a computing device other than the source computing device in the source server based on a first preset communication bus and a first peer-to-peer (peer-to-peer) receive communication operator; the source server communicates with the target server based on a send communication operator; and a target computing device communicates with a computing device other than the target computing device in the target server based on a second preset communication bus and a peer-to-peer send communication operator.

Optionally, the management device may determine, by reading a corresponding system architecture variable, whether a server supports peer-to-peer communication, to determine that the server has the peer-to-peer communication capability.

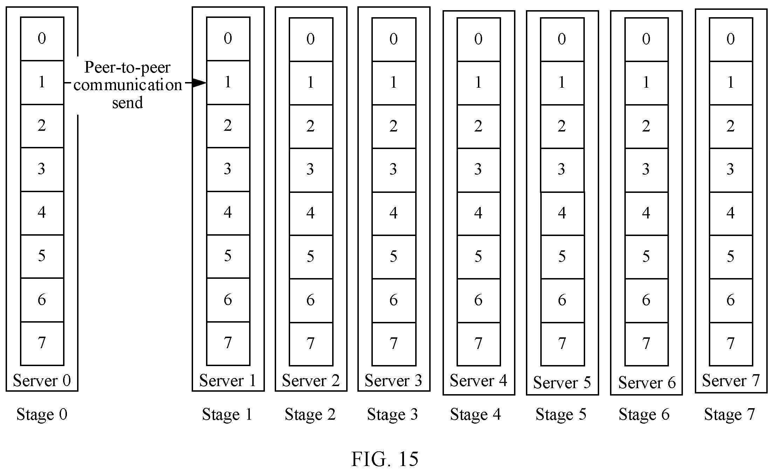

When data is transmitted based on the second data transmission method, for specific implementation, refer to FIG. 15. Servers (a server 0 to a server 7 in FIG. 15) respectively deployed with a stage 0 to a stage 7 each have a peer-to-peer communication capability. To be specific, each NPU in each server may access a memory of any NPU in the server, and send data obtained from the memory.

Specifically, in the optical networking architecture, in the server 0 having the peer-to-peer communication capability, an NPU numbered 1 may be directly used to send data in a memory of another NPU to an NPU numbered 1 in the server 1. The NPU numbered 1 in the server 0 is connected to the NPU numbered 1 in the server 1.

Still refer to FIG. 15, it is assumed that the server 0 deployed with the stage 0 is used as a source server, an NPU whose identifier is 1 in the server 0 is a source NPU, the server 1 deployed with the stage 1 is used as a target server, and an NPU whose identifier is 0 in the server 1 is a target NPU. In this case, the source NPU may receive, by using a first preset communication bus, where the preset communication bus may be a peripheral component interconnect express (peripheral component interconnect express, PCIe) bus or the like, to-be-transmitted data sent by NPUs other than the source NPU in the source server. Then, the source NPU sends all obtained to-be-transmitted data to the target NPU based on the send communication operator, and the target NPU sends all the obtained to-be-transmitted data to NPUs (that is, NPUs numbered "0 and 2 to 7" in the server 1 in FIG. 15) in the target server other than the NPU whose identifier is 1.

It can be learned that, in the second data transmission method, a communication process between two stages may include two steps. In a first step, the peer-to-peer send communication operator (or referred to as a P2P send communication operator) is executed in a server, and in a second step, the send communication operator (or referred to as a Send communication operator) is executed between servers.

In the second data transmission method, data transmission between servers deployed with different stages can be quickly implemented, thereby improving communication efficiency.

Third data transmission method:

When determining that the aggregation manner of the calculation result is not all reduce, and each server in the computing cluster does not have a peer-to-peer communication capability, the management device determines that the data transmission manner is: The source computing device communicates with a computing device other than the source computing device in the source server based on an all gather communication operator; the source server communicates with the target server based on a send communication operator; and a target computing device communicates with a computing device other than the target computing device in the target server based on a scatter communication operator.

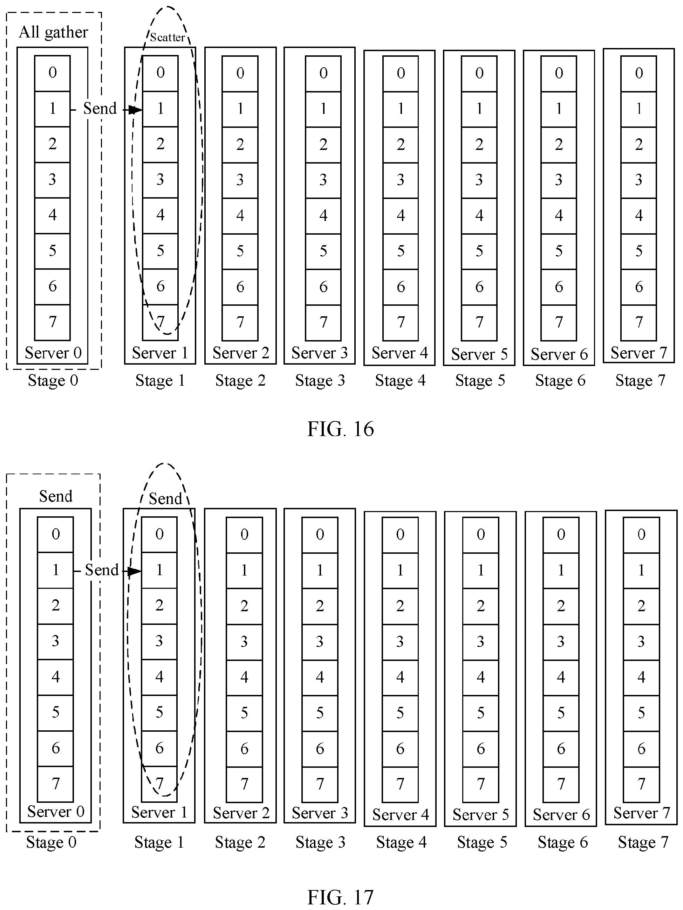

When data is transmitted based on the third data transmission method, for specific implementation, refer to FIG. 16. Data sent by NPUs in a server 0 to corresponding NPUs in a server 1 is different. Because a bandwidth in the server is far higher than a bandwidth between servers, data to be sent by the NPUs in the server 0 may be aggregated to obtain first spliced data, and the first spliced data is sent by an NPU whose identifier is 1 in the server 0. Then, an NPU whose identifier is 1 in the server 1 receives the first spliced data. The NPU divides the first spliced data into data blocks of a same size, and distributes the data blocks to NPUs in the server 1 (that is, NPUs numbered 0 and 2 to 7 in the server 1 in FIG. 16).

It can be learned that, in the third data transmission method, a communication process between two stages may include three steps. In a first step, the all gather communication operator (or referred to as an AllGather communication operator) is executed in a server, in a second step, the send communication operator (or referred to as a Send communication operator) is executed between servers, and in a third step, the scatter communication operator (or referred to as a Scatter communication operator) is executed in a next server.

Fourth data transmission method:

When determining that the aggregation manner of the calculation result is not all reduce, and each server in the computing cluster does not have a peer-to-peer communication capability, the management device determines that the data transmission manner is: The computing devices in the source server communicate with each other based on a send communication operator and a switching device; the source server communicates with the target server based on a send communication operator; and the computing devices in the target server communicate with each other based on a send communication operator and a switching device.

When data is transmitted based on the fourth data transmission method, for specific implementation, refer to FIG. 17. In FIG. 17, in an example in which each server has eight NPUs, there are two common types of network topologies formed by the eight NPUs. A first type is that the eight NPUs are fully connected (full connection), in other words, the eight NPUs are directly connected in pairs. A second type is that two groups of four NPUs are fully connected, in other words, eight NPUs are divided into two groups, each group includes four NPUs, and the four NPUs in each group are directly connected in pairs, to be specific, some NPUs in the two groups are connected by using a switching device (for example, a peripheral component interconnect express bridge (peripheral component interconnect express bridge, PCIe Bridge)), and other NPUs in the two groups cannot directly access each other, and need to perform forwarding with the help of the some NPUs.

It can be learned that, in the fourth data transmission method, a communication process between two stages may include three steps. In a first step, the send communication operator (or referred to as a Send communication operator) is executed in a server, in a second step, the send communication operator (or referred to as a Send communication operator) is executed between servers, and in a third step, the send communication operator (or referred to as a Send communication operator) is executed in a next server.

The fourth data transmission method may be understood as an extension of the first data transmission method and the third data transmission method. The data transmission method can implement communication between two stages more intuitively.

In embodiments of this application, because a connection topology of a computing device in a server, intra-server and inter-server bandwidths, and an amount of data of communication between different model stages are not fixed, NPU end-to-end communication overheads determined based on different data transmission methods are different. The management device may calculate communication overheads of each data transmission method, and select a data transmission method with minimum overheads as a target transmission method of data.

The following describes a process of calculating communication overheads of each data transmission method.

For the first data transmission method, a delay of data transmission between two stages includes a delay of the first step and a delay of the second step. The delay of the first step is equal to an amount of to-be-transmitted data divided by a bandwidth between servers. The delay of the second step is equal to an amount of to-be-broadcast data divided by a bandwidth between NPUs in a server. In this way, communication overheads of the first data transmission method may be determined based on a sum of the delay of the first step and the delay of the second step.

For the second data transmission method, a delay of data transmission between two stages includes a delay of the first step, a delay of the second step, and a delay of a third step. The delay of the first step is equal to a delay for an NPU in a server reading data from a memory of another NPU. The delay of the second step is equal to an amount of to-be-sent data between servers divided by a bandwidth between NPUs in the servers. The delay of the third step is equal to a delay for an NPU in a node writing data to a memory of another NPU. In this way, communication overheads of the second data transmission method may be determined based on a sum of the delay of the first step, the delay of the second step, and the delay of the third step.

For the third data transmission method, a delay of data transmission between two stages includes a delay of the first step, a delay of the second step, and a delay of the third step. The delay of the first step is equal to an amount of to-be-gathered data in a server divided by a bandwidth between NPUs in the server. The delay of the second step is equal to an amount of to-be-sent data between servers divided by a bandwidth between NPUs in the servers. The delay of the third step is equal to an amount of to-be-scattered data in a server divided by a bandwidth between NPUs in the server. In this way, communication overheads of the third data transmission method may be determined based on a sum of the delay of the first step, the delay of the second step, and the delay of the third step.

For the fourth data transmission method, a delay of data transmission between two stages includes a delay of the first step, a delay of the second step, and a delay of the third step. The delay of the first step is equal to an amount of to-be-sent data in a server divided by a bandwidth between NPUs in the server. The delay of the second step is equal to an amount of to-be-sent data between servers divided by a bandwidth between NPUs in the servers. The delay of the third step is equal to an amount of to-be-sent data in a server divided by a bandwidth between NPUs in the server. In this way, communication overheads of the fourth data transmission method may be determined based on a sum of the delay of the first step, the delay of the second step, and the delay of the third step.

Optionally, for a computing cluster, a bandwidth between servers and a bandwidth in a server are fixed, and a delay for a network interface card on an NPU reading data in a memory of another NPU is also fixed, and does not change during running. The foregoing information may be written into a configuration file in advance, and communication overheads of various data transmission methods may be quickly determined by reading the configuration file during running.

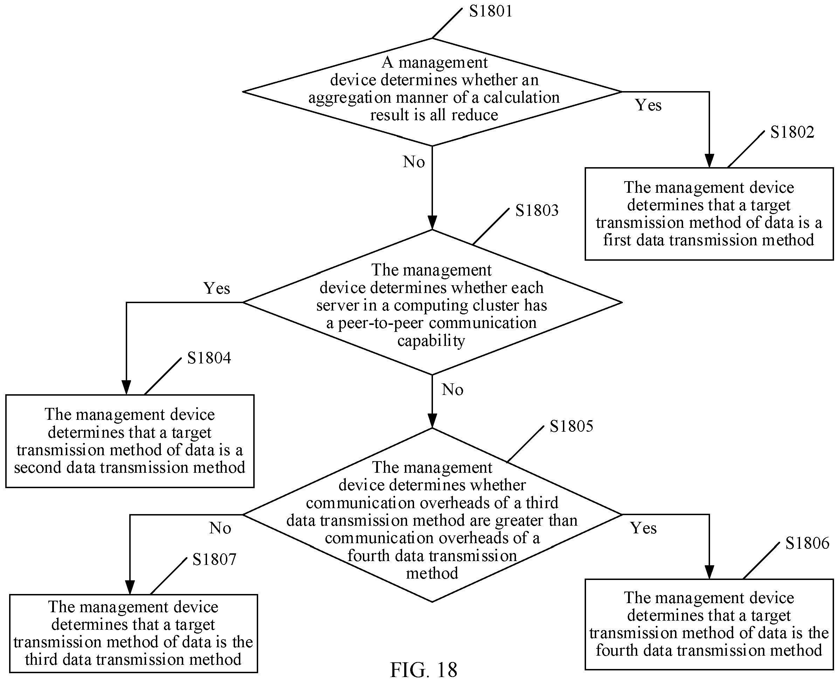

After calculation of the communication overheads of the data transmission methods is described, the following uses an example with reference to FIG. 18 to describe a process of determining a target transmission method of data according to an embodiment of this application.

S1801: The management device determines whether the aggregation manner of the calculation result is all reduce. If the management device determines that the aggregation manner of the calculation result is all reduce, S1802 is performed; or if the management device determines that the aggregation manner of the calculation result is not all reduce, S1803 is performed.

In this embodiment of this application, when determining that the computing device performs a computing operation (for example, compilation) on a corresponding network layer in a target model, and determining that the aggregation manner of the calculation result is all reduce, the management device may determine that the communication overheads of the first data transmission method in the foregoing four data transmission methods are the smallest. Therefore, when the management device determines that the aggregation manner of the calculation result is all reduce, S1802 is performed.

S1802: The management device determines that the target transmission method of data is the first data transmission method.

For the first data transmission method, refer to FIG. 13 and the corresponding embodiment. Details are not described herein again.

S1803: The management device determines whether each server in the computing cluster has a peer-to-peer communication capability. If each server in the computing cluster has the peer-to-peer communication capability, S1804 is performed; or if each server in the computing cluster does not have the peer-to-peer communication capability, S1805 is performed.

In this embodiment of this application, when the management device determines that the aggregation manner of the calculation result is all reduce, but each server in the computing cluster has the peer-to-peer communication capability, it may be determined that the communication overheads of the second data transmission method in the foregoing four data transmission methods are the smallest. Therefore, if each server in the computing cluster has the peer-to-peer communication capability, S1804 is performed.

S1804: The management device determines that the target transmission method of data is the second data transmission method.

S1805: The management device determines whether the communication overheads of the third data transmission method are greater than the communication overheads of the fourth data transmission method. If the communication overheads of the third data transmission method are greater than the communication overheads of the fourth data transmission method, S1806 is performed; or if the communication overheads of the third data transmission method are less than the communication overheads of the fourth data transmission method, S1807 is performed.

S1806: The management device determines that the target transmission method of data is the fourth data transmission method.

S1807: The management device determines that the target transmission method of data is the third data transmission method.

In this embodiment of this application, the management device may determine the communication overheads of the third data transmission method and the communication overheads of the fourth data transmission method. For a specific determining manner, refer to the foregoing descriptions. Details are not described herein again. After the communication overheads of the third data transmission method and the communication overheads of the fourth data transmission method are determined, a policy with minimum overheads may be selected from the two data transmission methods as the target transmission method of data.

In this embodiment of this application, after determining the target transmission method of data, the management device may transmit, to a target NPU over an optical channel, to-be-transmitted data corresponding to a source NPU.

Specifically, the management device may determine a first communication operator corresponding to the target transmission method of data. The first communication operator includes one or more of an operator used for communication between the source NPU and the target NPU in the target transmission method of data, an operator used for communication between NPUs in the target server, and a communication operator used for communication between NPUs in the source server. Then, when compiling the target model, the source server inserts the first communication operator into the target model, so that the source NPU transmits the to-be-transmitted data to the target NPU over an established corresponding optical channel and by using the first communication operator.

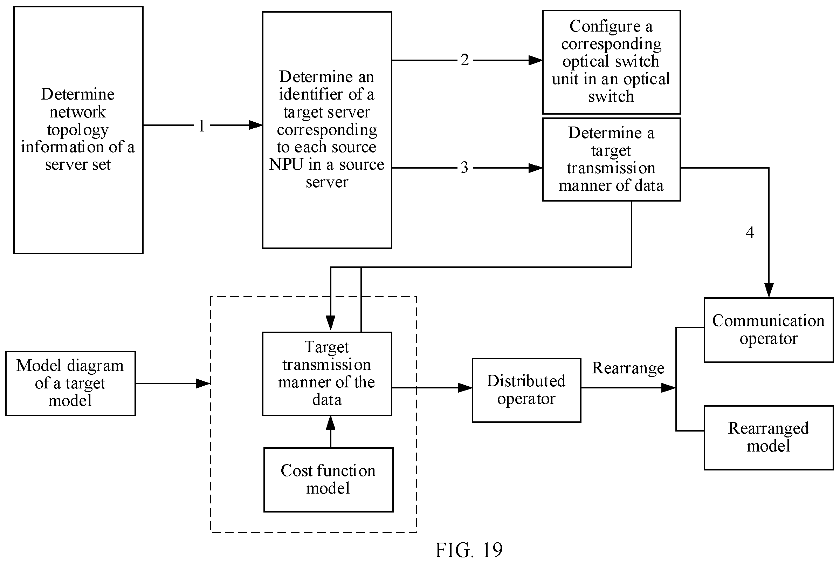

FIG. 19 is a diagram of a communication method according to an embodiment of this application. The communication method includes four processes. Process 1 ("1" in FIG. 19): A management device may calculate a connection policy between servers in an optical networking architecture based on network topology information of a computing cluster (refer to the FIG. 9 to FIG. 13 and the corresponding embodiment part), in other words, determine identifiers of target servers corresponding to source NPUs in a source server. Process 2 ("2" in FIG. 19): The management device determines connection information (for example, a connection relationship between the NPU whose identifier is 0 in the source server whose identifier is 0 and the NPU whose identifier is 0 in the server whose identifier is 1 in FIG. 12) between the servers according to the determined connection policy, and sends the connection information between the servers to an optical switch unit controller in an optical switch, so that the optical switch unit controller configures a corresponding optical switch unit in the optical switch, and establishes a physical optical channel between a source NPU in the source server and a target NPU corresponding to the source NPU. Process 3 ("3" in FIG. 19): The management device determines, based on a connection topology of a computing device and an aggregation manner of a calculation result, a target transmission method for transmitting to-be-transmitted data. Specifically, a data transmission method with minimum overheads may be selected from the foregoing four data transmission methods as a target transmission method of data. A process 4 ("4" in FIG. 19): When compiling a model diagram of a target model, the source server inserts a communication operator and a reverse communication operator that correspond to the target transmission method of data, to implement pre-training of the target model.

Specifically, before the process 4 is performed, a cost function model in FIG. 19 is used for performing convergence processing on the target model, and a distributed operator is used for dividing the target model into a plurality of rearranged models (that is, the foregoing stages) in a pipeline manner. When training a deployed stage of each server, the server may use a communication operator corresponding to a target transmission method of data corresponding to the server to perform data transmission, to accelerate the pre-training of the target model.

It can be learned that, in embodiments of this application, a connection policy for a full interconnection between servers in an optical networking architecture is provided. The connection policy can implement a full interconnection between servers in a computing cluster, so that data generated by training a target model deployed on a server can be communicated in the optical networking architecture. In addition, the connection policy may be applicable to various scenarios such as different quantities of servers and different quantities of computing devices in a server. Furthermore, a network topology, a server architecture, and a bandwidth between different nodes, and other capabilities are considered, to provide a solution for determining a target transmission method of data. Because the target transmission method of data may be implemented in a target model compilation phase, in comparison with a method for modifying a collective communications layer, overheads of selecting a communication solution during running are greatly reduced, and communication efficiency in model training is improved. In addition, because a target transmission method of data with optimal performance between servers is selected, an amount of data transmitted between the servers is reduced, thereby reducing a network congestion degree.

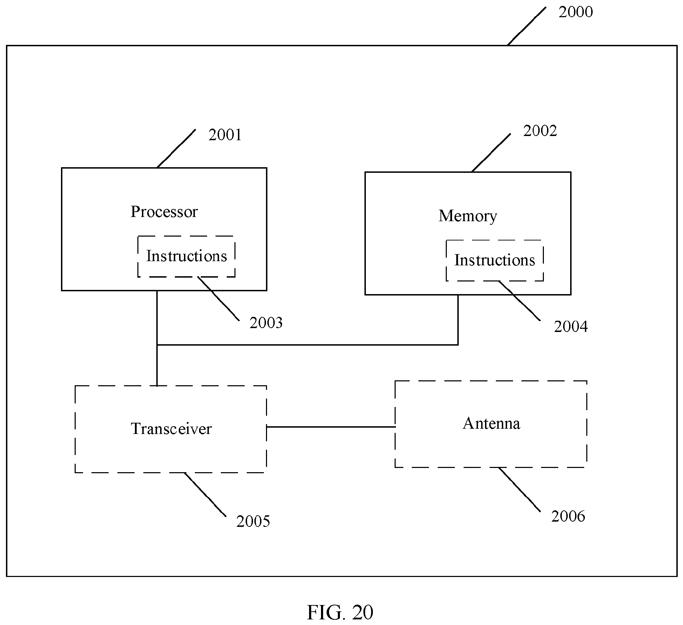

FIG. 20 is a diagram of a structure of a communication apparatus according to an embodiment of this application.

The communication apparatus 2000 includes one or more processors 2001. The processor 2001 may also be referred to as a processing unit, and may implement a specific control function. The processor 2001 may be a general-purpose processor, a dedicated processor, or the like, for example, including a baseband processor or a central processing unit. The baseband processor may be configured to process a communication protocol and communication data. The central processing unit may be configured to control the communication apparatus 2000, execute a software program, and/or process data. Different processors may be independent components, or may be disposed in one or more processing circuits, for example, integrated in one or more application-specific integrated circuits.

Optionally, the communication apparatus 2000 includes one or more memories 2002, configured to store instructions 2004. The instructions 2004 may be run on the processor, to enable the communication apparatus 2000 to perform the method described in the foregoing method embodiments. Optionally, the memory 2002 may further store data. The processor and the memory may be separately disposed, or may be integrated together.

Optionally, the communication apparatus 2000 may include instructions 2003 (which may also be referred to as code or a program sometimes). The instructions 2003 may be run on the processor, to enable the communication apparatus 2000 to perform the method described in the foregoing embodiments. The processor 2001 may store data.

Optionally, the communication apparatus 2000 may further include a transceiver 2005 and an antenna 2006. The transceiver 2005 may be referred to as a transceiver unit, a transceiver device, a transceiver circuit, a transceiver machine, an input/output interface, or the like, and is configured to implement a transceiver function of the communication apparatus 2000 by using the antenna 2006.

Optionally, the communication apparatus 2000 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a radar, a camera, a display screen, or the like. It may be understood that in some embodiments, the communication apparatus 2000 may include more or fewer components, or some components are integrated, or some components are split. The components may be implemented by hardware, software, or a combination of software and hardware.

The processor 2001 and the transceiver 2005 described in this embodiment of this application may be implemented on an integrated circuit (integrated circuit, IC), an analog IC, a radio frequency integrated circuit (radio frequency identification, RFID), a mixed signal IC, an application-specific integrated circuit (application-specific integrated circuit, ASIC), a printed circuit board (printed circuit board, PCB), an electronic device, or the like. The communication apparatus described in this specification may be an independent device (for example, an independent integrated circuit), or may be a part of a larger device (for example, a module that may be embedded in another device).

This application provides a communication apparatus. The communication apparatus may be the foregoing management device, or a communication device including the management device, or a functional module in the management device, for example, a baseband apparatus or a chip system. The communication apparatus may include a corresponding means (means) or module configured to perform the method according to the first aspect. For example, the communication apparatus includes a processing unit (or referred to as a processing module sometimes) and a transceiver unit (or referred to as a transceiver module sometimes). The transceiver unit can implement a sending function and a receiving function. When the transceiver unit implements the sending function, the transceiver unit may be referred to as a sending unit (or referred to as a sending module sometimes). When the transceiver unit implements the receiving function, the transceiver unit may be referred to as a receiving unit (or referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

The processing unit is configured to: determine, based on a quantity M of servers, a minimum quantity n of computing devices required by each server to implement a full interconnection between the M servers; when n is less than or equal to N, determine a connection policy between the servers when the M servers are fully interconnected; and connect the M servers according to the determined connection policy to enable the M servers to be fully interconnected.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform a function performed by the management device.

Based on the foregoing embodiments, an embodiment of this application further provides a communication apparatus. The communication apparatus may be a management device, or may be a chip or a chip system used in the management device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the management device.

Based on the foregoing embodiments, an embodiment of this application further provides a computer-readable storage medium. The computer-readable storage medium is configured to store a computer program. When the computer program is run on a computer, the computer is enabled to perform the model deployment method in the foregoing embodiments.

Based on the foregoing embodiments, an embodiment of this application further provides a computer program product, including a computer program. When the computer program is run on a computer, the computer is enabled to perform the model deployment method in the foregoing embodiments.

Based on the foregoing embodiments, an embodiment of this application further provides a chip system, including a processor and an interface. The processor is configured to invoke instructions from the interface and run the instructions. When the processor executes the instructions, the model deployment method in the foregoing embodiments is implemented.

The management device, the communication apparatus, the computer storage medium, the computer program product, or the chip provided in embodiments of this application is configured to perform a corresponding method provided above. Therefore, for beneficial effects that can be achieved by the management device, the communication apparatus, the computer storage medium, the computer program product, or the chip, refer to beneficial effects in the corresponding methods provided above. Details are not described herein again.

Based on the descriptions of the implementations, a person skilled in the art may understand that for the purpose of convenient and brief descriptions, division into the functional modules is merely used as an example for description. In an actual application, the functions can be allocated to different functional modules for implementation based on a requirement. In other words, an inner structure of an apparatus is divided into different functional modules, to implement all or some of the foregoing described functions.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the method described in embodiments of this application. The foregoing storage medium includes any medium that can store program code such as a USB flash drive, a removable hard disk, a read-only memory (read-only memory, ROM), a random access memory (random access memory, RAM), a magnetic disk, or an optical disc.

In the foregoing embodiments provided in this application, the method provided in embodiments of this application is described from a perspective of a management device serving as an execution entity. To implement functions in the foregoing method provided in embodiments of this application, the electronic device may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

According to the context, the term "when" or "after" used in the foregoing embodiments may be interpreted as a meaning of "if" or "after" or "in response to determining" or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)". In addition, in the foregoing embodiments, relationship terms such as first and second are used to distinguish one entity from another entity, but are not intended to limit any actual relationship and sequence between these entities.

All or some of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-drive disk (Solid-State Drive, SSD)), or the like. In a case in which no conflict occurs, the solutions in the foregoing embodiments may be combined for use.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

**Claims**

1. A communication method, wherein the method is applied to a computing cluster, the computing cluster comprises M servers, each server comprises N computing devices, the M servers are connected to an optical switch via computing devices in the M servers, to implement an interconnection between the servers, and the method comprises:

determining, based on the quantity M of the servers, a minimum quantity n of computing devices required by each server to implement a full interconnection between the M servers, wherein M, N, and n are positive integers; when n is less than or equal to N, determining a connection policy between the servers when the M servers are fully interconnected; and connecting the M servers according to the determined connection policy to enable the M servers to be fully interconnected.

2. The method according to claim 1, wherein the determining a connection policy between the servers when the M servers are fully interconnected comprises:

determining an identifier of a target server based on an identifier of a source server to which a connection is to be established, an identifier of a source computing device in the source server, and n and/or M, wherein the identifier of the source server is an identifier marked for the source server based on the quantity of servers, and the identifier of the source computing device is an identifier marked for the source computing device based on a quantity of computing devices comprised in the source server.

3. The method according to claim 2, wherein the determining an identifier of a target server based on an identifier of a source server to which a connection is to be established, an identifier of a source computing device in the source server, and M comprises:

determining the identifier of the target server according to a formula

$$\text{node}_{\text{dst}} = (\text{dev}_{\text{src}} - \text{node}_{\text{src}} + \text{M}) \bmod \text{M},$$

wherein
$\text{node}_{\text{dst}}$ represents the identifier of the target server, $\text{dev}_{\text{src}}$ represents the identifier of the source computing device, and $\text{node}_{\text{src}}$ represents the identifier of the source server.

4. The method according to claim 2, wherein if M is an even number, the determining an identifier of a target server based on an identifier of a source computing device, a source identifier of a source server, n, and M comprises:

determining the identifier of the target server according to a formula

$$\begin{cases} \text{when } node_{src} = \text{n}, \begin{cases} \text{if } \frac{\text{dev}_{\text{src}}}{2} = \left\lceil \frac{\text{dev}_{\text{src}}}{2} \right\rceil, \text{ node}_{\text{dst}} = \frac{\text{dev}_{\text{src}}+\text{M}}{2} \bmod \text{n}; \\ \text{if } \frac{\text{dev}_{\text{src}}}{2} \neq \left\lceil \frac{\text{dev}_{\text{src}}}{2} \right\rceil, \text{ node}_{\text{dst}} = \frac{\text{dev}_{\text{src}}+1}{2} \end{cases} \\ \text{when } (\text{dev}_{\text{src}} + 1 - \text{node}_{\text{src}} + \text{n}) \bmod \text{n} = \text{node}_{\text{src}}, \text{ node}_{\text{dst}} = \text{n}; \\ \text{node}_{\text{dst}} = (\text{dev}_{\text{src}} + 1 - \text{node}_{\text{src}} + \text{n}) \bmod \text{n} \end{cases},$$

wherein
$\text{node}_{\text{dst}}$ represents the identifier of the target server, $\text{dev}_{\text{src}}$ represents the identifier of the source computing device, and $\text{node}_{\text{src}}$ represents the identifier of the source server.

5. The method according to any one of claims 1 to 4, wherein the method further comprises:

performing, by the computing devices in the M servers, computing operations; and determining a data transmission manner based on a connection topology between the computing devices and an aggregation manner of a calculation result.

6. The method according to claim 5, wherein the determining a data transmission manner based on a connection topology between the computing devices and an aggregation manner of a calculation result comprises:

when the aggregation manner of the calculation result is all reduce, determining that the data transmission manner is: the source server communicates with the target server based on a send communication operator; a target computing device communicates with a computing device other than the target computing device in the target server based on a broadcast communication operator; and an interconnection is established between the target computing device and the source computing device; or

when each server in the computing cluster has a peer-to-peer communication capability, determining that the data transmission manner is: the source computing device communicates with a computing device other than the source computing device in the source server based on a first preset communication bus and a first peer-to-peer receive communication operator; the source server communicates with the target server based on a send communication operator; and a target computing device communicates with a computing device other than the target computing device in the target server based on a second preset communication bus and a peer-to-peer send communication operator; or

when the aggregation manner of the calculation result is not all reduce, and each server in the computing cluster does not have a peer-to-peer communication capability, determining that the data transmission manner is: the source computing device communicates with a computing device other than the source computing device in the source server based on an all gather communication operator; the source server communicates with the target server based on a send communication operator; and a target computing device communicates with a computing device other than the target computing device in the target server based on a scatter communication operator; or

when the aggregation manner of the calculation result is not all reduce, and each server in the computing cluster does not have a peer-to-peer communication capability, determining that the data transmission manner is: the computing devices in the source server communicate with each other based on a send communication operator and a switching device; the source server communicates with the target server based on a send communication operator; and the computing devices in the target server communicate with each other based on a send communication operator and a switching device.

7. A communication apparatus, comprising a processing module, wherein
the processing module is configured to: obtain a quantity M of servers in a computing cluster and a quantity N of computing devices in each server; determine, based on the quantity M of the servers, a minimum quantity n of computing devices required by each server to implement a full interconnection between the M servers; when n is less than or equal to N, determine a connection policy between the servers when the M servers are fully interconnected; and connect the M servers according to the determined connection policy to enable the M servers to be fully interconnected.

8. The apparatus according to claim 7, wherein the processing module is specifically configured to:

determine an identifier of a target server based on an identifier of a source server to which a connection is to be established, an identifier of a source computing device in the source server, and n and/or M, wherein
the identifier of the source server is an identifier marked for the source server based on the quantity of servers, and the identifier of the source computing device is an identifier marked for the source computing device based on a quantity of computing devices comprised in the source server.

9. The apparatus according to claim 8, wherein the processing module is specifically configured to:

determine the identifier of the target server according to a formula

$$\mathrm{node_{dst}} = (\mathrm{dev_{src}} - \mathrm{node_{src}} + M) \bmod M,$$

wherein
$\mathrm{node_{dst}}$ represents the identifier of the target server, $\mathrm{dev_{src}}$ represents the identifier of the source computing device, and $\mathrm{node_{src}}$ represents the identifier of the source server.

10. The apparatus according to claim 8, wherein the processing module is specifically configured to:

determine the identifier of the target server according to a formula

$$\begin{cases} \text{when } node_{src} = n, \begin{cases} \text{if } \frac{dev_{src}}{2} = \left\lceil \frac{dev_{src}}{2} \right\rceil, \; node_{dst} = \frac{dev_{src}+M}{2} \bmod n; \\ \text{if } \frac{dev_{src}}{2} \neq \left\lceil \frac{dev_{src}}{2} \right\rceil, \; node_{dst} = \frac{dev_{src}+1}{2} \end{cases} \\ \text{when } (dev_{src} + 1 - node_{src} + n) \bmod n = node_{src}, \; node_{dst} = n; \\ node_{dst} = (dev_{src} + 1 - node_{src} + n) \bmod n \end{cases}$$

wherein

$node_{dst}$ represents the identifier of the target server, $dev_{src}$ represents the identifier of the source computing device, and $node_{src}$ represents the identifier of the source server.

11. The method apparatus according to any one of claims 7 to 10, wherein the processing module is further configured to:

perform, by the computing devices in the M servers, computing operations; and
determine a data transmission manner based on a connection topology between the computing devices and an aggregation manner of a calculation result.

12. The apparatus according to claim 11, wherein the processing module is further configured to:

when the aggregation manner of the calculation result is all reduce, determine that the data transmission manner is: the source server communicates with the target server based on a send communication operator; a target computing device communicates with a computing device other than the target computing device in the target server based on a broadcast communication operator; and an interconnection is established between the target computing device and the source computing device; or
when each server in the computing cluster has a peer-to-peer communication capability, determine that the data transmission manner is: the source computing device communicates with a computing device other than the source computing device in the source server based on a first preset communication bus and a first peer-to-peer receive communication operator; the source server communicates with the target server based on a send communication operator; and a target computing device communicates with a computing device other than the target computing device in the target server based on a second preset communication bus and a peer-to-peer send communication operator; or
when the aggregation manner of the calculation result is not all reduce, and each server in the computing cluster does not have a peer-to-peer communication capability, determine that the data transmission manner is: the source computing device communicates with a computing device other than the source computing device in the source server based on an all gather communication operator; the source server communicates with the target server based on a send communication operator; and a target computing device communicates with a computing device other than the target computing device in the target server based on a scatter communication operator; or
when the aggregation manner of the calculation result is not all reduce, and each server in the computing cluster does not have a peer-to-peer communication capability, determine that the data transmission manner is: the computing devices in the source server communicate with each other based on a send communication operator and a switching device; the source server communicates with the target server based on a send communication operator; and the computing devices in the target server communicate with each other based on a send communication operator and a switching device.

13. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 6.

14. A computer-readable storage medium, wherein the computer-readable storage medium is configured to store a computer program, and when the computer program is run on a computer, the computer is enabled to perform the method according to any one of claims 1 to 6.

15. A computer program product, wherein the computer program product comprises a computer program, when the computer program is run on a computer, the computer is enabled to perform the method according to any one of claims 1 to 6.

**16.** A chip system, wherein the chip system comprises:

a processor and an interface, the processor is configured to invoke instructions from the interface and run the instructions, and when the processor executes the instructions, the method according to any one of claims 1 to 6 is implemented.

FIG. 1

FIG. 2

| Server 0 | Server 1 | Server 2 | Server 3 | Server 4 | Server 5 | Server 6 | Server 7 |
|---|---|---|---|---|---|---|---|
| 0 | 8 | 16 | 24 | 32 | 40 | 48 | 56 |
| 1 | 9 | 17 | 25 | 33 | 41 | 49 | 57 |
| 2 | 10 | 18 | 26 | 34 | 42 | 50 | 58 |
| 3 | 11 | 19 | 27 | 35 | 43 | 51 | 59 |
| 4 | 12 | 20 | 28 | 36 | 44 | 52 | 60 |
| 5 | 13 | 21 | 29 | 37 | 45 | 53 | 61 |
| 6 | 14 | 22 | 30 | 38 | 46 | 54 | 62 |
| 7 | 15 | 23 | 31 | 39 | 47 | 55 | 63 |
| Stage 0 | Stage 1 | Stage 2 | Stage 3 | Stage 4 | Stage 5 | Stage 6 | Stage 7 |

FIG. 3

| Server 0 | Server 1 | Server 2 | Server 3 | Server 4 | Server 5 | Server 6 | Server 7 |
|---|---|---|---|---|---|---|---|
| 0 | 8 | 16 | 24 | 32 | 40 | 48 | 56 |
| 1 | 9 | 17 | 25 | 33 | 41 | 49 | 57 |
| 2 | 10 | 18 | 26 | 34 | 42 | 50 | 58 |
| 3 | 11 | 19 | 27 | 35 | 43 | 51 | 59 |
| 4 | 12 | 20 | 28 | 36 | 44 | 52 | 60 |
| 5 | 13 | 21 | 29 | 37 | 45 | 53 | 61 |
| 6 | 14 | 22 | 30 | 38 | 46 | 54 | 62 |
| 7 | 15 | 23 | 31 | 39 | 47 | 55 | 63 |
| Stage 0 | Stage 1 | Stage 2 | Stage 3 | Stage 4 | Stage 5 | Stage 6 | Stage 7 |

FIG. 4

FIG. 5

FIG. 6

Computing cluster

Management device

Optical switch

FIG. 7

A management device determines, based on a quantity M of servers, a minimum quantity n of computing devices required by each server to implement a full interconnection between the M servers

S801

If n is less than or equal to a quantity N of computing devices included in each server, the management device determines a connection policy between the servers when the M servers are fully interconnected

S802

The management device connects the M servers according to the determined connection policy between the servers to enable the M servers to be fully interconnected

S803

FIG. 8

FIG. 9

FIG. 10

FIG. 11

FIG. 12

|        | Server 0 | Server 1 | Server 2 | Server 3 | Server 4 | Server 5 | Server 6 | Server 7 |
|--------|----------|----------|----------|----------|----------|----------|----------|----------|
| NPU 0  |          |          |          |          |          |          |          |          |
| NPU 1  |          |          |          |          |          |          |          |          |
| NPU 2  |          |          |          |          |          |          |          |          |
| NPU 3  |          |          |          |          |          |          |          |          |
| NPU 4  |          |          |          |          |          |          |          |          |
| NPU 5  |          |          |          |          |          |          |          |          |
| NPU 6  |          |          |          |          |          |          |          |          |

FIG. 13

FIG. 14

FIG. 15

FIG. 16

FIG. 17

S1801

A management
device determines whether an
aggregation manner of a calculation
result is all reduce

Yes

S1802

The management device
determines that a target
transmission method of data is a
first data transmission method

No

S1803

The management
device determines whether each
server in a computing cluster has
a peer-to-peer communication
capability

Yes

S1804

The management device
determines that a target
transmission method of data is a
second data transmission method

No

S1805

The management
device determines whether
communication overheads of a third
data transmission method are greater than
communication overheads of a
fourth data transmission
method

Yes

S1806

The management device
determines that a target
transmission method of data is the
fourth data transmission method

No

S1807

The management device
determines that a target
transmission method of data is the
third data transmission method

FIG. 18

FIG. 19

2000

2001

Processor

Instructions

2003

2002

Memory

Instructions

2004

Transceiver

2005

Antenna

2006

FIG. 20

## INTERNATIONAL SEARCH REPORT

| International application No. |
|---|
| **PCT/CN2023/112962** |

**A. CLASSIFICATION OF SUBJECT MATTER**

H04L49/253(2022.01)i

According to International Patent Classification (IPC) or to both national classification and IPC

**B. FIELDS SEARCHED**

Minimum documentation searched (classification system followed by classification symbols)

IPC: H04L G06F

Documentation searched other than minimum documentation to the extent that such documents are included in the fields searched

Electronic data base consulted during the international search (name of data base and, where practicable, search terms used)

CJFD, CNABS, CNTXT, ENTXT, ENTXTC, WPABS, WPABSC: 互联, 全连接, 策略, 多, 服务器, 服务器集群, 服务器全互联, 光交换机, 集群, 计算设备, 连接, 路径, 路由, 全规约, 全互联, 全连接, 神经网络处理器, 通信子, CPU, GPU, network, neural, NPU, processing, server, unit, connections, switch

**C. DOCUMENTS CONSIDERED TO BE RELEVANT**

| Category* | Citation of document, with indication, where appropriate, of the relevant passages | Relevant to claim No. |
|---|---|---|
| A | CN 109302470 A (ZHENGZHOU YUNHAI INFORMATION TECHNOLOGY CO., LTD.) 01 February 2019 (2019-02-01) entire document | 1-16 |
| A | CN 104954439 A (SUGON CLOUD COMPUTING TECHNOLOGY CO., LTD.) 30 September 2015 (2015-09-30) entire document | 1-16 |
| A | CN 106708551 A (HUAWEI TECHNOLOGIES CO., LTD.) 24 May 2017 (2017-05-24) entire document | 1-16 |
| A | CN 112804730 A (GUANGDONG OPPO MOBILE TELECOMMUNICATIONS CORP., LTD.) 14 May 2021 (2021-05-14) entire document | 1-16 |
| A | US 2017085500 A1 (PLURIBUS NETWORKS, INC.) 23 March 2017 (2017-03-23) entire document | 1-16 |

✓ Further documents are listed in the continuation of Box C.      ✓ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 October 2023** | **01 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/112962**

### C.    DOCUMENTS CONSIDERED TO BE RELEVANT

| Category* | Citation of document, with indication, where appropriate, of the relevant passages | Relevant to claim No. |
|---|---|---|
| A | US 2018225158 A1 (HEWLETT PACKARD ENTERPRISE DEVELOPMENT LP) 09 August 2018 (2018-08-09)<br>entire document | 1-16 |

Form PCT/ISA/210 (second sheet) (July 2022)

## INTERNATIONAL SEARCH REPORT
### Information on patent family members

International application No.

**PCT/CN2023/112962**

| Patent document cited in search report | | | Publication date (day/month/year) | Patent family member(s) | | | Publication date (day/month/year) |
|---|---|---|---|---|---|---|---|
| CN | 109302470 | A | 01 February 2019 | None | | | |
| CN | 104954439 | A | 30 September 2015 | None | | | |
| CN | 106708551 | A | 24 May 2017 | None | | | |
| CN | 112804730 | A | 14 May 2021 | None | | | |
| US | 2017085500 | A1 | 23 March 2017 | None | | | |
| US | 2018225158 | A1 | 09 August 2018 | WO | 2017023340 | A1 | 09 February 2017 |
| | | | | US | 10387225 | B2 | 20 August 2019 |
| | | | | EP | 3128423 | A1 | 08 February 2017 |

Form PCT/ISA/210 (patent family annex) (July 2022)

**REFERENCES CITED IN THE DESCRIPTION**

**Patent documents cited in the description**

- CN 202211414731